# EUROPEAN PATENT APPLICATION

(11) **EP 4 821 957 A1**
(43) Date of publication of application: **14.10.2026**
(21) Application number: 24900601.6
(22) Date of filing: 03.12.2024
(51) Int. Cl.: C08F 2/18, C08F 14/26, C08L 27/18

(54) **PRODUCTION METHOD FOR AQUEOUS DISPERSION, PRODUCTION METHOD FOR SECOND FLUORINE-CONTAINING POLYMER, AQUEOUS DISPERSION, AND SOLID COMPOSITION**

(30) Priority: 06.12.2023 JP 2023205993
(71) Applicant: AGC Inc., Chiyoda-ku Tokyo 100-8405 (JP)
(72) Inventor: SHIBASAKI, Kosuke, Tokyo 100-8405 (JP); YANAGIYA, Aoi, Tokyo 100-8405 (JP); TAGUCHI, Daisuke, Tokyo 100-8405 (JP)
(74) Representative: Müller-Boré & Partner Patentanwälte PartG mbB
(86) International application number: PCT/JP2024/042677
(87) International publication number: WO 2025/121307

(57) **Abstract**

A method for producing an aqueous dispersion, which comprises: polymerizing a first monomer containing tetrafluoroethylene in the presence of a compound represented by the formula (X) and a polymerization initiator, in the presence of an aqueous medium and substantially in the absence of an emulsifier having a fluorine atom, to produce an aqueous dispersion that contains particles of a first fluorinated polymer having no melting point, the particles having an average particle size of 500 nm or less: C(X¹)(X²)=C(X³)-L-Z (X); in the formula (X), X¹, X² and X³ are each independently a hydrogen atom, a fluorine atom, a perfluoromethyl group or an alkyl group, L is a single bond or a bivalent linking group, and Z is an anionic group or a salt of the anionic group.

## Description

### TECHNICAL FIELD

The present invention relates to a method for producing an aqueous dispersion, a method for producing a second fluorinated polymer, an aqueous dispersion, and a solid composition.

### BACKGROUND ART

Fluorinated polymers are used in various industrial fields by virtue of excellent heat resistance, chemical resistance, flame retardancy, weather resistance, etc. In production of such fluorinated polymers, an aqueous dispersion containing particles of a fluorinated polymer may sometimes be used.

As a method for producing an aqueous dispersion, Patent Document 1 discloses a method of polymerizing a fluorinated monomer in the presence of a specific compound.

### PRIOR ART DOCUMENTS

### PATENT DOCUMENTS

Patent Document 1: WO2022/019241

### DISCLOSURE OF INVENTION

### TECHNICAL PROBLEM

It was found that the method for producing an aqueous dispersion disclosed in Patent Document 1, the number of particles of the fluorinated polymer produced is small and the yield should still be improved.

Further, in view of reduction in environmental burden, it is preferred to use substantially no emulsifier having a fluorine atom.

The present inventors have found that by the method for producing an aqueous dispersion disclosed in Patent Document 1, the dispersibility of the fluorinated polymer to be produced is not sufficient, and further found that the number of particles of the fluorinated polymer to be produced should still be improved.

Further, in view of reduction in environmental burden, it is preferred to use substantially no emulsifier having a fluorine atom. The object of the present invention is to realize, substantially without using an emulsifier having a fluorine atom, the number of particles of a fluorinated polymer equal to the case of using a conventional emulsifier having a fluorine atom.

It is an object of the present invention to provide a method for producing an aqueous dispersion with a large number of particles of a fluorinated polymer substantially without using an emulsifier having a fluorine atom.

It is also an object of the present invention to provide a method for producing a second fluorinated polymer, an aqueous dispersion and a solid composition.

### SOLUTION TO PROBLEM

The present inventors have conducted extensive studies and as a result found that the above objects can be achieved by the following configurations.
[1] A method for producing an aqueous dispersion, which comprises:
   polymerizing a first monomer containing tetrafluoroethylene in the presence of a compound represented by the formula (X) and a polymerization initiator, in the presence of an aqueous medium and substantially in the absence of an emulsifier having a fluorine atom,
   to produce an aqueous dispersion that contains particles of a first fluorinated polymer having no melting point, the particles having an average particle size of 500 nm or less:

      C(X¹)(X²)=C(X³)-L-Z (X)
   in the formula (X),
   X¹, X² and X³ are each independently a hydrogen atom, a fluorine atom, a perfluoromethyl group or an alkyl group,
   L is a single bond or a bivalent linking group, and
   Z is an anionic group or a salt of the anionic group.
[2] The method for producing an aqueous dispersion according to [1], wherein Z is - SO₃M,
   where M is a hydrogen atom, a metal atom, N(R^{M1})₄ or P(R^{M2})₄, and
   R^{M1} and R^{M2} are each independently a hydrogen atom or a substituent, provided that any two of R^{M1} may be mutually bonded to form a ring, the plurality of R^{M1} may be identical or different from each other, any two of R^{M2} may be mutually bonded to form a ring, and the plurality of R^{M2} may be identical or different from each other.
[3] The method for producing an aqueous dispersion according to [1] or [2], wherein the content of the compound represented by the formula (X) is 1.0 to 1000 mass ppm to the total mass of the aqueous medium.
[4] The method for producing an aqueous dispersion according to any one of [1] to [3], wherein the first monomer contains a perfluoroalkyl vinyl ether.
[5] A method for producing a second fluorinated polymer, which comprises polymerizing a second monomer in the aqueous dispersion produced by the production method as defined in any one of [1] to [4], to produce a second fluorinated polymer.
[6] The method for producing a second fluorinated polymer according to [5], wherein the content of a compound represented by the formula (S1) to be described below is 5 mass ppm or less to the total mass of the aqueous dispersion.
[7] The method for producing a second fluorinated polymer according to [5] or [6], wherein the content of a compound represented by the formula (S3) to be described below is 5 mass ppm or less to the total mass of the aqueous dispersion.
[8] The method for producing a second fluorinated polymer according to any one of [5] to [7], wherein the second monomer contains at least one member selected from the group consisting of tetrafluoroethylene, chlorotrifluoroethylene and vinylidene fluoride.
[9] The method for producing a second fluorinated polymer according to any one of [5] to [8], wherein the second monomer contains a perfluoroalkyl vinyl ether.
[10] The method for producing a second fluorinated polymer according to any one of [5] to [9], wherein the second fluorinated polymer has no melting point.
[11] An aqueous dispersion, which contains substantially no water-soluble emulsifier having a fluorine atom, and which contains particles of a fluorinated polymer and an aqueous medium,
   wherein the number of the particles is 0.5×10¹⁴ particles/mL or more,
   the average particle size of the particles is 500 nm or less,
   the fluorinated polymer has units based on tetrafluoroethylene and units based on a perfluoroalkyl vinyl ether, and
   the fluorinated polymer has no melting point.
[12] The aqueous dispersion according to [11], wherein the fluorinated polymer has a 1 mass% thermogravimetric loss temperature of 350°C or higher.
[13] A solid composition which contains a fluorinated polymer having no melting point,
   wherein the fluorinated polymer has units based on tetrafluoroethylene,
   the content of an emulsifier having a fluorine atom is 1500 mass ppb or less to the total mass of the solid composition,
   the content of a compound represented by the formula (S1) is 1500 mass ppb or less to the total mass of the solid composition, and
   the content of a compound represented by the formula (S3) is 100 mass ppb or less to the total mass of the solid composition:

      H-(CF₂)ₙ₁-COOM^{s} (S1)
   in the formula (S1),
   n1 is an integer of 3 to 13, and
   M^{s} is a hydrogen atom, Na, K or NH₄;

      H-(CF₂)ₙ₂-so₃M^{s} (S3)
   in the formula (S3),
   n2 is an integer of 4 to 10, and
   M^{s} is a hydrogen atom, Na, K or NH₄.
[14] The solid composition according to [13], wherein the solid composition has a metal content of less than 5 mass ppm to the total mass of the solid composition.

### ADVANTAGEOUS EFFECTS OF INVENTION

According to the present invention, it is possible to provide a method for producing an aqueous dispersion with a large number of particles of a fluorinated polymer substantially without using an emulsifier having a fluorine atom.

Further, according to the present invention, it is also possible to provide a method for producing a second fluorinated polymer, an aqueous dispersion and a solid composition.

### DESCRIPTION OF EMBODIMENTS

Meanings of terms used in the present specification are as follows.

" to " used to show a range of numerical values is used to include numerical values before and after it as the lower limit value and the upper limit value. In numerical ranges described stepwise in this specification, the upper limit value or the lower limit value described in a certain numerical range may be replaced with an upper limit value or a lower limit value of another numerical range described stepwise. In numerical ranges described in this specification, the upper limit value or the lower limit value described in a certain numerical range may be replaced with values indicated in Examples.

In this specification, as each component, a single type of a substance corresponding to the component may be used alone, or two or more types may be used in combination. In a case where two or more types are used in combination for each component, the content of the component means the total content of the substances used in combination, unless otherwise specified.

In this specification, a combination of two or more preferred embodiments corresponds to a more preferred embodiment.

"Units" generically mean an atomic group derived from one molecule of a monomer, directly formed by polymerization of the monomer, and an atomic group obtained by chemical conversion of a part of the atomic group. "Units based on a monomer" may sometimes be referred to simply as "units".

The content (mass% or mol%) of each units to all units of a polymer is obtained by analyzing the polymer by nuclear magnetic resonance spectroscopy (NMR). Usually, the content of each units calculated from the amount of each monomer added substantially agrees with the actual content of each units.

### [Method for producing aqueous dispersion]

The method for producing an aqueous dispersion of the present invention (hereinafter also referred to as "the present production method") is a method for producing an aqueous dispersion, which comprises:
polymerizing a first monomer containing tetrafluoroethylene in the presence of a compound represented by the formula (X) (hereinafter also referred to as "compound X") and a polymerization initiator, in the presence of an aqueous medium and substantially in the absence of an emulsifier having a fluorine atom,
to produce an aqueous dispersion that contains particles of a first fluorinated polymer having no melting point, the particles having an average particle size of 500 nm or less (hereinafter also referred to as "first aqueous dispersion").

The reason as to why the number of particles of the first fluorinated polymer is large without using an emulsifier having a fluorine atom, is estimated to be as follows. By the presence of the compound X in the reaction system at the time of polymerization of the first monomer, dispersibility of the particles of the first fluorinated polymer to be produced, in the first aqueous dispersion, improves, and the specific surface area of the particles in the first aqueous dispersion increases. As a factor of improvement of the dispersibility, for example, improvement of the zeta potential of the particles of the first fluorinated polymer by the compound X is considered.

It was also found that in a case where the second monomer is polymerized using an aqueous dispersion with a large number of particles of the first fluorinated polymer, the larger the number of particles of the first fluorinated polymer is, the faster the polymerization rate of the second monomer tends to be. Accordingly, it is desired to increase the number of particles of the first fluorinated polymer.

Hereinafter, increasing of the number of the particles of the first fluorinated polymer in production of the first fluorinated polymer will hereinafter also be referred to as "the effect of the present invention".

### <Emulsifier>

The present production method is conducted substantially in the absence of an emulsifier having a fluorine atom.

"Substantially in the absence of an emulsifier having a fluorine atom" refers to, in production of the first aqueous dispersion, a content of the emulsifier having a fluorine atom to the total mass of the aqueous dispersion of 10 mass ppm or less, and the content is preferably 150 mass ppb or less, more preferably 50 mass ppb or less. The lower limit is 0 mass ppb.

The present production method is conducted preferably substantially in the absence of an emulsifier having a fluorine atom and an emulsifier having no fluorine atom, with a view to preventing a decrease of the molecular weight of the fluorinated polymer to be produced.

"Substantially in the absence of an emulsifier having a fluorine atom and an emulsifier having no fluorine atom (hereinafter they will generically be referred to as "emulsifier")" refers to, in production of the first aqueous dispersion, a content of the emulsifier to the total mass of the aqueous dispersion of 10 mass ppm or less, and the content is preferably 150 mass ppb or less, more preferably 50 mass ppb or less. The lower limit is 0 mass ppb.

The content of the emulsifier may be measured using a liquid chromatograph mass spectrometer. Specifically, the measurement method disclosed in WO2018/181904, at paragraphs [0721] to [0732], may be mentioned.

The emulsifier having a fluorine atom and the emulsifier having no fluorine atom may be water-soluble. The water-soluble emulsifier refers to an emulsifier having a solubility in 1000 g of water at 25°C of 100 mg or more, and a water-insoluble emulsifier refers to an emulsifier other than the water-soluble emulsifier. The water-soluble emulsifier may be either ionic or non-ionic.

The emulsifier having a fluorine atom and the emulsifier having no fluorine atom may be one containing no carbon-carbon double bond.

The first fluorinated polymer and the second fluorinated polymer to be described below, are both water-insoluble.

None of the compound X to be described below, a polymer of the compound X, the first fluorinated polymer to be described below, and the second fluorinated polymer to be described below, correspond to the emulsifier.

The emulsifier having a fluorine atom may be an anionic fluorinated emulsifier.

The anionic fluorinated emulsifier may be an emulsifier of which the moiety excluding the anionic group has a total number of carbon atoms of 20 or less and which has a fluorine atom, or an emulsifier of which the anionic moiety has a molecular weight of 800 or less and which has a fluorine atom. The "anionic moiety" refers to a moiety excluding the cation of the fluorinated emulsifier.

The emulsifier having no fluorine atom has no fluorine atom and has a hydrocarbon group such as an alkyl group, as a hydrophobic moiety. The hydrogen atom in the hydrocarbon group of the emulsifier having no fluorine atom, may be replaced with a halogen atom other than a fluorine atom.

The emulsifier having no fluorine atom may be an anionic hydrocarbon emulsifier or a non-ionic hydrocarbon emulsifier.

The anionic hydrocarbon emulsifier refers to an emulsifier having a negatively charged hydrophilic moiety such as a carboxylate group, a sulfonate group, a sulfate group, a phosphonate group or a phosphate group, and having a hydrocarbon group such as an alkyl group as the hydrophobic moiety.

Specific examples of the anionic hydrocarbon emulsifier include sodium dodecyl sulfate, a highly branched C10 tertiary carboxylic acid available as Versatic (registered trademark) 10 from Resolution Performance Products, sodium linear alkyl polyether sulfonate available as Avanel (registered trademark) S series from BASF, and sulfosuccinate emulsifier Lankropol (registered trademark) K8300 available from AkzoNobel Surface Chemistry LLC.

The non-ionic hydrocarbon emulsifier is am emulsifier which does not dissociate into ions in water and show surface activity, and has a hydrocarbon group such as an alkyl group as the hydrophobic moiety.

The hydrophilic moiety of the non-ionic hydrocarbon emulsifier may be a water-soluble functional group such as a polyethylene oxide chain, obtained by polymerization of ethylene oxide. The non-ionic hydrocarbon emulsifier may be a polyalkylene oxide block copolymer, for example, a block copolymer having polyethylene oxide and polypropylene oxide.

Further, as another non-ionic hydrocarbon emulsifier, emulsifiers as described in JP-A-2016-537499 at paragraphs [0043] to [0052] may be mentioned.

The emulsifier having a fluorine atom and the emulsifier having no fluorine atom may contain a silicon atom. The emulsifier containing a silicon atom may be a siloxane emulsifier. The siloxane emulsifier is a hydrocarbon-containing emulsifier having a siloxane skeleton.

The siloxane emulsifier may be emulsifiers as described in US Patent No. 6,841,616 (Wille et al) and US Patent No. 7,977,438 (Brothers et al).

The emulsifier having no fluorine atom may be a polymer emulsifier. The polymer emulsifier may be a polymer having a hydrophilic group at its side chain. Such a polymer emulsifier may, for example, be a polymer having units based on a compound having a polymerizable moiety and a hydrophilic group. Further, a polymer which originally had no hydrophilic group but had units based on a compound having a group convertible to a hydrophilic group, having been subjected to post-treatment such as hydrolysis, may also be mentioned.

The emulsifier having a fluorine atom in the present invention has a molecular weight of 1000 g/mol or less, and the emulsifier having no fluorine atom has a molecular weight of 100000 g/mol or less.

### <Aqueous medium>

The present production method is conducted in the presence of an aqueous medium.

The aqueous medium may, for example, be water or a solvent mixture of water and a water-soluble organic solvent. Specific examples of the water-soluble organic solvent include tert-butanol, propylene glycol, dipropylene glycol, dipropylene glycol monomethyl ether and tripropylene glycol.

Before start of the polymerization of the first monomer used for production of the first fluorinated polymer, the content of the aqueous medium is preferably 20 to 80 vol%, more preferably 40 to 70 vol%, to the capacity of the reactor.

In this specification, "before start of the polymerization of the first monomer used for production of the first fluorinated polymer" means immediately before the polymerization start point. The "polymerization start point" means a point when the first monomer and the polymerization initiator are allowed to coexist in a reactor after the interior of the reactor is heated to the polymerization temperature or higher, a point when the interior of the reactor is heated to the polymerization temperature or higher after the first monomer and the polymerization initiator are allowed to coexist in the reactor, or the like.

### <Compound X>

In the present production method, the compound X is used. The compound X may be copolymerized with the first monomer to be described below.

The compound X is a compound represented by the formula (X).

C(X¹)(X²)=C(X³)-L-Z (X)

In the formula (X),
X¹, X² and X³ are each independently a hydrogen atom, a fluorine atom, a perfluoromethyl group or an alkyl group,
L is a single bond or a bivalent linking group, and
Z is an anionic group or a salt of the anionic group.

In the formula (X), X¹, X² and X³ are each independently a fluorine atom, a perfluoromethyl group, a hydrogen atom or an alkyl group.

The alkyl group may be liner, branched or cyclic.

The number of carbon atoms in the alkyl group is preferably 1 to 10, more preferably 1 to 3, further preferably 1.

In the formula (X), X¹, X² and X³ are preferably a fluorine atom or a hydrogen atom, and it is preferred that all of them are a hydrogen atom in view of excellent polymerizability.

In the formula (X), L is a single bond or a bivalent linking group.

The bivalent lining group may be an alkylene group, a carbonyl group, an ether bond, an thioether bond, a sulfonyl group, -NH-, -SiH₂-, a phenylene group, -CF₂-, or a combination of two or more of them. The combination of two or more of them may, for example, be an ester bond, a thioester bond, an amido bond, a sulfonamide bond, a combination of an alkylene group with an ether bond, a combination of an alkylene group with an ester bond, or a combination of an alkylene group with an amide bond.

The alkylene group may be linear, branched or cyclic, and is preferably linear or branched, more preferably branched. The number of carbon atoms in the alkylene group may, for example, be 1 to 6 and is preferably 1 to 4.

In the formula (X), L may, for example, be a single bond, an alkylene group, an ether bond, an ester bond, or *^{C}-CO-NH-R-*^{Z}, and is preferably a single bond, a C₁₋₆ alkylene group, or *^{C}-CO-NH-R-*^{Z}, more preferably a single bond, a C₁₋₂ alkylene group, or *^{C}-CO-NH-R-*^{Z}, and with a view to increasing the number of particle of the fluorinated copolymer obtained and with a view to decreasing the content of the compound represented by (S3) in the solid composition containing the fluorinated polymer obtained, particularly preferably *^{C}-CO-NH-R-*^{Z}. *^{C} is a moiety linked to the carbon atom in the formula (X), *^{Z} is a moiety linked to Z in the formula (X), and R is a C₁₋₆ alkylene group or a C₁₋₆ fluoroalkylene group.

The alkylene group or the fluoroalkylene group may be linear, branched or cyclic, and is preferably branched.

The number of carbon atoms in the alkylene group or the fluoroalkylene group as R is 1 to 6, preferably 2 to 4, more preferably 4.

R is preferably a C₁₋₆ linear or branched alkylene group.

In the formula (X), Z is an anionic group or a salt of the anionic group.

The anionic group may, for example, be -SO₃H, -OSO₃H, -P(=O)(OH)₂, - OP(=O)(OH)₂ or -COOH.

The salt of the anionic group may, for example, be a group having the hydrogen ion of the above anionic group replaced with a cation other than the hydrogen ion.

The cation may, for example, be a metal ion, an ammonium ion, an imidazolium cation, a pyrrolidinium cation, a pyridinium cation, a piperidinium cation or a phosphonium cation.

The metal ion may, for example, be an alkali metal ion such as a sodium ion, a potassium ion or a lithium ion; or an alkaline earth metal ion such as a calcium ion or a magnesium ion.

In the formula (X), Z is preferably -SO₃M, -OSO₃M, -P(=O)(OM)₂, -OP(=O)(OM)₂ or -COOM.

Z is, from the viewpoint of productivity, preferably -SO₃M and -COOM, more preferably -SO₃Na or -COONa, further preferably -SO₃Na.

When Z is -SO₃M, the latex tends to be more stable, and the number of the particles of the first fluorinated polymer tends to be large.

M is a hydrogen atom, a metal atom, N(R^{M1})₄ or P(R^{M2})₄, and R^{M1} and R^{M2} are each independently a hydrogen atom or a substituent.

The metal atom represented as M is preferably a group I metal atom, more preferably Li, Na or K.

The substituent represented as R^{M1} and R^{M2} is preferably a monovalent organic group, more preferably a monovalent hydrocarbon group, further preferably an alkyl group or an aromatic hydrocarbon group.

The number of carbon atoms in the substituent is preferably 1 to 10.

The alkyl group may be linear, branched or cyclic.

The aromatic hydrocarbon group may be monocyclic or polycyclic. The aromatic hydrocarbon group is preferably a phenyl group.

The molecular weight of the compound X may be for example 70 to 500, and from the viewpoint of dispersion stability, preferably 70 to 450, more preferably 100 to 300.

Specific examples of the compound X include 2-acrylamide-2-methyl-1-propanesulfonic acid, N-tigloylglycine, 6-acrylamidehexanoic acid, 1,1-difluoro-2-methyl-2-[(1-oxo-2-propen-1-yl)amino]-1-propanesulfonic acid, 3-methyl-3-[(2-methyl-1-oxo-2-propen-1-yl)amino]-2-butanesulfonic acid, 2-methacrylamide-2-methylpropanesulfonic acid, 2,3-dimethyl-3-[(1-oxo-2-propen-1-yl)amino]-2-butanesulfonic acid and metal salts thereof.

The metal salt may be a metal salt with a metal atom represented by M.

Before start of the polymerization of the first monomer used for production of the first fluorinated polymer, the content of the compound X is, to the total mass of the aqueous medium, preferably 1.0 to 1000 mass ppm, and in view of more excellent effect of the present invention, more preferably 1.0 to 500 mass ppm, further preferably 3.0 to 100 mass ppm, particularly preferably 5.0 to 30.0 mass ppm.

### <Polymerization initiator>

The polymerization initiator used for the present production method is preferably a water-soluble polymerization initiator, more preferably a persulfate such as ammonium persulfate, sodium persulfate or potassium persulfate, or an organic polymerization initiator such as disuccinic peroxide or azobisisobutylamidine dihydrochloride, more preferably a persulfate, particularly preferably ammonium persulfate.

The amount of the polymerization initiator used is preferably 0.01 to 5 parts by mass, more preferably 0.01 to 3 parts by mass, further preferably 0.01 to 2 parts by mass per 100 parts by mass of the first monomer used.

### <First monomer>

The first monomer used in the present production method contains tetrafluoroethylene (hereinafter also referred to as "TFE").

The first monomer may contain a monomer other than TFE.

The amount of TFE used is, to the amount of the first monomer used, preferably 5 to 80 mol%, more preferably 20 to 75 mol%, further preferably 50 to 75 mol%.

The first monomer preferably contains a perfluoroalkyl vinyl ether (hereinafter also referred to as "PAVE").

PAVE is preferably a monomer represented by the formula (1), whereby excellent polymerizability in production of the first fluorinated polymer is achieved, and the second fluorinated polymer can be produced more efficiently.

CF₂=CF-O-R^{f1} (1)

In the formula (1), R^{f1} is a C₁₋₁₀ perfluoroalkyl group. The number of carbon atoms of R^{f1} is preferably 1 to 8 in view of more excellent polymerizability, more preferably 1 to 6, further preferably 1 to 5, particularly preferably 1 to 3.

The perfluoroalkyl group may be linear or may be branched.

Specific examples of PAVE include perfluoro(methyl vinyl ether) (hereinafter also referred to as "PMVE"), perfluoro(ethyl vinyl ether) (hereinafter also referred to as "PEVE") and perfluoro(propyl vinyl ether) (hereinafter also referred to as "PPVE"), and preferred are PMVE and PPVE, whereby the second fluorinated polymer can be produced more efficiently, and more preferred is PMVE.

The amount of PEVE used, to the amount of the first monomer used, is preferably 20 to 95 mol%, more preferably 25 to 80 mol%, further preferably 25 to 50 mol%.

The amount of the TFE units and the PAVE units used, to the amount of the first monomer used, is preferably 99.0 to 100.0 mol%, more preferably 99.5 to 100.0 mol%, further preferably 99.9 to 100.0 mol%.

The first monomer may contain a monomer other than **TFE** and PAVE, or it may contain substantially no other monomer, whereby the second fluorinated polymer can be produced more efficiently.

"Contain substantially no other monomer" means a content of the other monomer to the amount of the first monomer used of 0.01 mol% or less, preferably 0 mol%.

### <Process>

The polymerization method for the first fluorinated polymer is not particularly limited so long as it is a method of polymerizing the first monomer containing tetrafluoroethylene in the presence of the compound X and the polymerization initiator, in the presence of the aqueous medium and substantially in the absence of the emulsifier having a fluorine atom.

The above method may, for example, be a method of preparing a solution containing the aqueous medium and the compound X, and conducting polymerization of the first monomer using the solution and the polymerization initiator. More specifically, the above solution and the first monomer are added to a reactor, the reactor is heated, and the polymerization initiator is added to the reactor to conduct polymerization of the first monomer.

By polymerization for the first fluorinated polymer, the first fluorinated polymer dispersed in the form of particles in the aqueous medium is obtained. The resulting aqueous dispersion having the particles of the first fluorinated polymer dispersed, may be used as it is as the first aqueous dispersion, or, another aqueous medium may be added and the resulting dispersion may be used as the first aqueous dispersion. Otherwise, by solvent replacement, the particles of the first fluorinated polymer may be dispersed in other aqueous medium, and this dispersion may be used as the first aqueous dispersion.

The first monomer is put into a reactor by a conventional method. For example, the first monomer may be put into the reactor continuously or intermittently so as to keep a predetermined polymerization pressure. Otherwise, the first monomer may be dissolved in the aqueous medium and the obtained solution is continuously or intermittently put into the reactor.

In a case where the polymerization initiator is used, the polymerization initiator may be added to the reactor all at once or in divided portions.

The polymerization temperature is preferably 10 to 95°C, more preferably 15 to 90°C.

The polymerization pressure is preferably 0.5 to 4.0 MPaG, more preferably 0.6 to 3.5 MPaG.

The polymerization time is preferably 90 to 1000 minutes, more preferably 90 to 700 minutes.

### (First aqueous dispersion)

The first aqueous dispersion preferably contains substantially no water-soluble emulsifier. The water-soluble emulsifier is as described above.

"Contains substantially no emulsifier" means a content of the water-soluble emulsifier of 10 mass ppm or less to the total mass of the first aqueous dispersion, preferably 150 mass ppb or less, more preferably 50 mass ppb or less. The lower limit is 0 mass ppb.

Further, the first aqueous dispersion preferably contains substantially none of compounds represented by the formulae (S1) to (S4).

"Contains substantially no compound represented by the formula (S1)" means a content of the compound represented by the formula (S1) of 10 mass ppm or less to the total mass of the aqueous dispersion, preferably 5 mass ppm or less, more preferably 150 mass ppb or less, further preferably 50 mass ppb or less. The lower limit is 0 mass ppb.

"Contains substantially no compound represented by the formula (S2)" means a content of the compound represented by the formula (S2) of 10 mass ppm or less to the total mass of the aqueous dispersion, preferably 5 mass ppm or less, more preferably 150 mass ppb or less, further preferably 50 mass ppb or less. The lower limit is 0 mass ppb.

"Contains substantially no compound represented by the formula (S3)" means a content of the compound represented by the formula (S3) of 10 mass ppm or less to the total mass of the aqueous dispersion, preferably 5 mass ppm or less, more preferably 150 mass ppb or less, further preferably 50 mass ppb or less. The lower limit is 0 mass ppb.

"Contains substantially no compound represented by the formula (S4)" means a content of the compound represented by the formula (S4) of 10 mass ppm or less to the total mass of the aqueous dispersion, preferably 5 mass ppm or less, more preferably 150 mass ppb or less, further preferably 50 mass ppb or less. The lower limit is 0 mass ppb.

When no emulsifier is used at the time of production of the first fluorinated polymer contained in the first aqueous dispersion, generation of compounds represented by the formula (S1) to the formula (S4) can be suppressed, and the contents of these compounds can easily be adjusted. The contents of these compounds can also be reduced by the above mentioned purification treatment.

H-(CF₂)ₙ₁-COOM^{S} (S1)

F-(CF₂)ₙ₁-COOM^{S} (S2)

H-(CF₂)ₙ₂-SO₃M^{S} (S3)

F-(CF₂)ₙ₂-SO₃M^{S} (S4)

In the formulae (S1) to (S4),
n1 is an integer of 3 to 13,
n2 is an integer of 4 to 10, and
M^{S} is a hydrogen atom, Na, K, or NH₄.

The method of measuring the contents may be the method described in

### EXAMPLES.

Before start of the polymerization of the second monomer to be polymerized for production of the second fluorinated polymer, the content of the particles of the first fluorinated polymer is, to the total mass of the first aqueous dispersion, preferably 0.01 to 5.00 mass%, and more preferably 0.01 to 3.0 mass%, whereby the second fluorinated polymer can be produced more efficiently.

In this specification, "before start of the polymerization of the second monomer to be polymerized for production of the second fluorinated polymer" means immediately before the polymerization start point. The "polymerization start point" means a point when the second monomer and a polymerization initiator are allowed to coexist in a reactor after the interior of the reactor is heated to the polymerization temperature or higher, a point when the interior of the reactor is heated to the polymerization temperature or higher after the second monomer and the polymerization initiator are allowed to coexist in the reactor, or the like.

Before start of the polymerization of the second monomer to be polymerized for production of the second fluorinated polymer, the first aqueous dispersion contains no second monomer to be polymerized for production of the second fluorinated polymer, nor polymerization initiator.

The first aqueous dispersion may contain a component other than the above components.

Specific examples of the other component which the first aqueous dispersion may contain, include a chain transfer agent, a reducing agent and a pH adjusting agent.

Specific examples of the chain transfer agent include ethyl acetate, methanol, ethanol, t-butyl methyl ether, diether ether, n-pentane, cyclohexane, methane and propane. As the chain transfer agent, a compound represented by the after-described formula (I) may also be mentioned.

Specific examples of the pH adjusting agent include an inorganic salt and ammonia. Specific examples of the inorganic salt include phosphates such as disodium hydrogenphosphate and sodium dihydrogen phosphate, and carbonates such as sodium hydrogen carbonate and sodium carbonate. More preferred specific examples of the phosphate include disodium hydrogenphosphate dihydrate and disodium hydrogenphosphate dodecahydrate.

In a case where the first aqueous dispersion contains a chain transfer agent, the content of the chain transfer agent is preferably 0.1 to 5 parts by mass per 100 parts by mass of the aqueous medium.

In a case where the first aqueous dispersion contains a pH adjusting agent, the content of the pH adjusting agent is preferably 0.01 to 3.0 parts by mass per 100 parts by mass of the aqueous medium.

The solid content concentration of the first aqueous dispersion is preferably 5 to 50 mass%, more preferably 10 to 45 mass%.

The solid content concentration of the first aqueous dispersion may be measured, for example, by the following method.

The solid content concentration of first aqueous dispersion is obtained by heating 2.0 g of the first aqueous dispersion at 170°C for 20 minutes, weighing the mass of the residue, and converting it to the solid content concentration in accordance with the following formula.

Solid content concentration (mass%)=100×residue (g) of first aqueous dispersion after heating/mass (2.0 g) of first aqueous dispersion

### (Particles of first fluorinated polymer)

The particles of the first fluorinated polymer are particles produced by the present production method.

It is estimated that the particles of the first fluorinated polymer, at the time of polymerization of the second monomer to be described below, adsorbs and includes the second monomer at the hydrophobic moiety to solubilizer the second monomer, even substantially without the emulsifier having a fluorine atom, to facilitate polymerization of the second monomer.

The first fluorinated polymer may be the same as or different from the second fluorinated polymer to be described below.

The average particle size of the particles of the first fluorinated polymer is 500 nm or less, and in view of dispersion stability of the particles, preferably 300 nm or less, more preferably 200 nm or less, further preferably 150 nm or less. The lower limit is preferably 2 nm or more, more preferably 5 nm or more, further preferably 10 nm or more.

The average particle size of the particles of the first fluorinated polymer is a particle size calculated by analyzing the autocorrelation function, which is obtained by dynamic light scattering measurements, using the cumulant method under the assumption of a monodisperse particle distribution.

The number of the particles of the first fluorinated polymer is preferably 0.5×10¹⁴ particles/mL or more, more preferably 1.0×10¹⁴ particles/mL or more, further preferably 2.0×10¹⁴ particles/mL or more, still more preferably 3.0×10¹⁴ particles/mL or more, particularly preferably 5.0×10¹⁴ particles/mL or more. The upper limit is preferably 2.0×10¹⁵ particles/mL or less.

The number of the particles of the first fluorinated polymer is the number of the particles per 1 mL of the first aqueous dispersion. The method of measuring the number of particles may be the method described in EXAMPLES.

The first fluorinated polymer has no melting point.

"Has no melting point" means that when the melting point of the first fluorinated polymer is measured by a differential scanning calorimeter, no melting peak is observed, and specifically, no melting peak is observed in a temperature range of 150°C or higher (preferably in a temperature range of 150 to 330°C). The glass transition peak does not correspond to the melting peak.

The specific method of measuring the melting point may be the method described in EXAMPLES.

The 1 mass% thermogravimetric loss temperature of the first fluorinated polymer is preferably 350°C or higher, more preferably 375°C or higher, further preferably 400°C or higher. The upper limit is preferably 600°C or lower.

The 1 mass% thermogravimetric loss temperature may be measured, for example, by using a thermogravimetric analyzer. The specific method of measuring the 1 mass% thermogravimetric loss temperature may be the method described in EXAPLES.

The first fluorinated polymer has units based on the first monomer.

The first fluorinated polymer contains units based on tetrafluoroethylene (hereinafter also referred to as "TFE units").

The content of the TFE units is, to all units of the first fluorinated polymer, preferably 5 to 80 mol%, more preferably 20 to 75 mol%, further preferably 50 to 75 mol%.

The details of TFE from which the TFE units is derived are the same as TFE in the above-described present production method, and the preferred embodiment is also the same.

In this specification, in a case where only a single type of the first fluorinated polymer is contained, "all units of the first fluorinated polymer" refers to all units contained in the single type of the first fluorinated polymer. In a case where two or more types of the first fluorinated polymers are contained, "all units of the first fluorinated polymer" refers to all units contained in the two or more types of the first fluorinated polymers. The same applies to other fluorinated polymers.

The first fluorinated polymer preferably further contains units based on a perfluoroalkyl vinyl ether (hereinafter also referred to as "PAVE units").

The content of the PAVE units is, to all units of the first fluorinated polymer, preferably 20 to 95 mol%, more preferably 25 to 80 mol%, further preferably 25 to 50 mol%.

The total content of the TFE units and the PAVE units is, to all units of the first fluorinated polymer, preferably 99.0 to 100.0 mol%, more preferably 99.5 to 100.0 mol%, further preferably 99.9 to 100.0 mol%.

The details of PAVE from which the PAVE units is derived are the same as PAVE in the above-described present production method, and the preferred embodiment is also the same. The suitable amount used is the same also in a case where PMVE or PPVE is used as PAVE.

In the present production method, by the presence of the compound X in the reaction system, particularly the first fluorinated polymer obtained by polymerization of the first monomer containing the TFE units and the PAVE units, becomes a polymer with a large number of the particles, even without using the emulsifier. Further, the first fluorinated polymer obtained by polymerization of a monomer having a content of the TFE units of 5 to 80 mol% and a content of the PAVE units of 20 to 95 mol% to all units of the first fluorinated polymer, becomes a polymer with a large number of the particles and having no melting point.

The first fluorinated polymer may contain units other than the TFE units and the PAVE units, and with a view to more efficiently producing the second fluorinated polymer, it may contain substantially no other units.

"Contain substantially no other units" means a content of the units based on the other monomer of 0.01 mol% or less to all units of the first fluorinated polymer, preferably 0 mol%.

The other monomer from which the other units are derived may be other monomers in the second fluorinated polymer to be described below.

### [Method for producing second fluorinated polymer]

The method for producing a second fluorinated polymer is a method for producing a second fluorinated polymer, which comprises polymerizing a second monomer in the first aqueous dispersion produced by the above-described present production method, to produce a second fluorinated polymer.

The method for producing a second fluorinated polymer is preferably a method for producing a second fluorinated polymer, which comprises polymerizing a second monomer using a polymerization initiator in the aqueous dispersion produced by the above-described present production method, to produce a second fluorinated polymer.

### <First aqueous dispersion>

The first aqueous dispersion is the aqueous dispersion produced by the above-described present production method.

The preferred embodiment of the first aqueous dispersion is as described above.

The first aqueous dispersion is used for the method for producing a second fluorinated polymer, that is for polymerization to obtain the second fluorinated polymer, preferably after conducting a purification treatment to reduce the polymerization initiator and decomposed products thereof in the first polymerization initiator, or to deactivate the polymerization initiator.

In the purification treatment, by removing the polymerization initiator and decomposed products thereof which may be contained in the first aqueous dispersion, the second fluorinated polymer having desired physical property values is likely to be obtained.

The purification method may be heat treatment of removal using an ion exchange resin. The ion exchange resin is preferably an anion exchange resin. The purification may be conducted several times.

### <Second monomer>

The second monomer preferably contains at least one member selected from the group consisting of TFE, chlorotrifluoroethylene (hereinafter also referred to as "CTFE"), vinylidene fluoride (hereinafter also referred to as "VdF"), PAVE and hexafluoropropylene, more preferably contains at least one member selected from the group consisting of TFE, CTFE and VdF. The second monomer also preferably contains at least one member selected from the group consisting of TFE and PAVE, and it more preferably contains both TFE and PAVE.

The second monomer may contain a monomer other than the above monomer.

Specific examples of the other monomer include ethylene,, propylene, vinyl chloride, vinylidene chloride, a monomer having two or more polymerizable unsaturated bonds (hereinafter also referred to as "BO"), a monomer having one or more of at least one type of atom selected from the group consisting of a chlorine atom, a bromine atom and an iodine atom, a monomer having a nitrile group (hereinafter also referred to as "R_{CN}"), and units based on the after-described compound (6) (hereinafter also referred to as "POAVE units").

BO is a monomer having two or more polymerizable unsaturated bonds.

Specific examples of the polymerizable unsaturated bond include a carbon atom-carbon atom double bond (C=C) and a carbon atom-carbon atom triple bond (C≡C). The polymerizable unsaturated bond is more preferably a carbon atom-carbon atom double bond (C=C).

The number of the polymerizable unsaturated bonds in BO is preferably 2 to 6, more preferably 2 or 3, further preferably 2, in view of more excellent polymerizability.

BO preferably further has a fluorine atom, whereby the resulting crosslinked rubber article has a smaller compression set at high temperature.

BO is preferably a monomer represented by the formula (2), whereby the resulting crosslinked rubber article has more excellent mold release property.

(CR²¹R²²=CR²³-)ₐ₁R²⁴ (2)

In the formula (2), R²¹, R²² and R²³ are each independently a hydrogen atom, a fluorine atom, a methyl group or a trifluoromethyl group, a1 is an integer of 2 to 6, R²⁴ is a C₁₋₁₀ a1-valent perfluorohydrocarbon group, or a group having an etheric oxygen atom at a terminal end or in a carbon-carbon bond of the perfluorohydrocarbon group. The plurality of R²¹, the plurality of R²² and the plurality of R²³ may be respectively identical to each other or different from each other, and they are preferably identical to each other.

a1 is preferably 2 or 3, particularly preferably 2.

R²¹, R²² and R²³ are preferably a fluorine atom or a hydrogen atom, whereby BO is more excellent in polymerizability, it is more preferred that all of R²¹, R²² and R²³ are fluorine atoms or all of them are hydrogen atoms, and it is particularly preferred that all of R²¹, R²², R²³ are fluorine atoms, whereby the resulting crosslinked rubber article is more excellent in mold release property.

R²⁴ may be linear, branched or cyclic, preferably linear or branched, more preferably linear. The number of carbon atoms of R²⁴ is preferably 2 to 8, more preferably 3 to 7, further preferably 3 to 6, particularly preferably 3 to 5.

R²⁴ may or may not have an etheric oxygen atom, but it preferably has an etheric oxygen atom, whereby more excellent crosslinking property and rubber physical properties are achieved.

The number of the etheric oxygen atom in R²⁴ is preferably 1 to 6, more preferably 1 to 3, further preferably 1 or 2. The etheric oxygen atom in R²⁴ is present preferably at a terminal end of R²⁴.

Specific examples of a preferred monomer among the monomers represented by the formula (2) include a monomer represented by the formula (3) and a monomer represented by the formula (4).

(CF₂=CF-)₂R³¹ (3)

In the formula (3), R³¹ is a C₁₋₁₀ bivalent perfluorohydrocarbon group or a group having an etheric oxygen atom at a terminal end or in a carbon-carbon bond of the perfluorohydrocarbon group.

(CH₂=CH-)₂R⁴¹ (4)

In the formula (4), R⁴¹ is a C₁₋₁₀ bivalent perfluorohydrocarbon group, or a group having an etheric oxygen atom at a terminal end or in a carbon-carbon bond of the perfluorohydrocarbon group.

Specific examples of the monomer represented by the formula (3) include CF₂=CFO(CF₂)₂OCF=CF₂, CF₂=CFO(CF₂)₃OCF=CF₂, CF₂=CFO(CF₂)₄OCF=CF₂, CF₂=CFO(CF₂)₆OCF=CF₂, CF₂=CFO(CF₂)₈OCF=CF₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂, and CF₂=CFOCF₂CF₂O(CF₂O)₂CF₂CF₂OCF=CF₂.

Specific examples of a more preferred monomer among the monomers represented by the formula (3), include CF₂=CFO(CF₂)₃OCF=CF₂ (hereinafter also referred to as "C3DVE"), and CF₂=CFO(CF₂)₄OCF=CF₂ (hereinafter also referred to as "C4DVE").

Specific examples of the monomer represented by the formula (4) include CH₂=CH(CF₂)₂CH=CH₂, CH₂=CH(CF₂)₄CH=CH₂ and CH₂=CH(CF₂)₆CH=CH₂.

Specific examples of a more preferred monomer among the monomers represented by the formula (4) include CH₂=CH(CF₂)₆CH=CH₂ (hereinafter also referred to as "C6DV").

Particularly, BO is preferably C3DVE or C4DVE.

The monomer having one or more of at least one type of atom selected from the group consisting of a chlorine atom, a bromine atom and an iodine atom may be a monomer having a bromine atom or a monomer having an iodine atom.

Specific examples of the monomer having a bromine atom include CF₂=CFOCF₂CF₂CF₂OCF₂CF₂Br, bromotrifluoroethylene, 4-bromo-3,3,4,4-tetrafluorobutene-1 (BTFB), vinyl bromide, 1-bromo-2,2-difluoroethylene, perfluoroallyl bromide, 4-bromo-1,1,2-trifluorobutene-1, 4-bromo-1,1,3,3,4,4-hexafluorobutene, 4-bromo-3-chloro-1,1,3,4,4-pentafluorobutene, 6-bromo-5,5,6,6-tetrafluorohexene, 4-bromoperfluorobutene-1, and 3,3-difluoroallyl bromide. Further, fluorinated compounds such as 2-bromo-perfluoroethylperfluorovinyl ether and CF₂Br-R_{f}-O-CF=CF₂ (wherein R_{f} is a perfluoroalkylene group), for example, fluorovinyl ethers such as CF₂BrCF₂O-CF=CF₂, ROCF=CFBr, and ROCBr=CF₂ (wherein R is a lower alkyl group or a fluoroalkyl group), specifically, CH₃OCF=CFBr and CF₃CH₂OCF=CFBr may be mentioned.

Specific examples of the monomer having an iodine atom include iodized olefins represented by the formula: CHR=CH-Z-CH₂CHR-I (wherein R is -H or -CH₃; Z is a linear or branched C₁₋₁₈ (per)fluoroalkylene group which may contain one or more etheric oxygen atoms in some cases, or a (per)fluoropolyoxyalkylene group disclosed in US Patent No. 5674959). Unsaturated ethers of the formulae: I(CH₂CF₂CF₂)ₙOCF=CF₂ and ICH₂CF₂O[CF(CF₃)CF₂O]ₙCF=CF₂ (in the formulae, n=1 to 3) disclosed in US Patent No. 5717036 may also be mentioned. Further, iodoethylene, 4-iodo-3,3,4,4-tetrafluorobutene-1 (ITFB), 3-chloro-4-iodo-3,4,4-trifluorobutene, 2-iodo-1,1,2,2-tetrafluoro-1-(vinyloxy)ethane, 2-iodo-1-(perfluorovinyloxy)-1,1,-2,2-tetrafluoroethylene, 1,1,2,3,3,3-hexafluoro-2-iodo-1-(perfluorovinyloxy)propane, 2-iodoethylvinyl ether, 3,3,4,5,5,5-hexafluoro-4-iodopentene and iodotrifluoroethylene, disclosed in US Patent No. 4694045 may be mentioned. Further, allyl iodide and 2-iodo-perfluoroethylperfluorovinyl ether may be mentioned.

R_{CN} has a polymerizable unsaturated bond. R_{CN} preferably has one polymerizable unsaturated bond in view of polymerizability. Specific examples of the polymerizable unsaturated bond include a carbon atom-carbon atom double bond (C=C) and a carbon atom-carbon atom triple bond (C≡C).

R_{CN} is preferably a monomer represented by the following formula (5) in view of more excellent mold release property and heat resistance.

CR⁵¹R⁵²=CR⁵³-R⁵⁴-CN (5)

In the formula (5), R⁵¹, R⁵² and R⁵³ are each independently a hydrogen atom, a fluorine atom or a methyl group, and R⁵⁴ is a C₁₋₁₀ bivalent perfluorohydrocarbon group or a group having an etheric oxygen atom at a terminal end or in a carbon-carbon bond of the perfluorohydrocarbon group.

In view of excellent polymerizability of R_{CN}, it is preferred that R⁵¹, R⁵² and R⁵³ are a fluorine atom or a hydrogen atom, it is more preferred that all of R⁵¹, R⁵² are R⁵³ are fluorine atoms or all of them are hydrogen atoms, and it is particularly preferred that all of R⁵¹, R⁵², R⁵³ are fluorine atoms, whereby the resulting crosslinked rubber article is more excellent in mold release property and heat resistance.

R⁵⁴ may be linear, branched or cyclic, and is preferably linear or branched. The number of carbon atoms of R⁵⁴ is preferably 2 to 8, more preferably 3 to 7, further preferably 3 to 6, particularly preferably 3 to 5.

R⁵⁴ may or may not contain an etheric oxygen atom, and in view of more excellent rubber physical properties, preferably contains an etheric oxygen atom.

The number of etheric oxygen atom in R⁵⁴ is preferably 1 to 3, particularly preferably 1 or 2.

Specific examples of the monomer represented by the formula (5) include CF₂=CFOCF₂CF(CF₃)OCF₂CF₂CN (hereinafter also referred to as "8CNVE"), CF₂=CFO(CF₂)₅CN (hereinafter also referred to as "MV5CN"), CF₂=CFOCF₂CF₂CF₂OCF(CF₃)CN and CF₂=CFO(CF₂)₃CN, and in view of more excellent mold release property and heat resistance, preferred are 8CNVE and MV5CN.

The POAVE units are units based on the compound (6).

CF₂=CF(OCF₂CF₂)ₙ-(OCF₂)ₘ-OR^{f2} (6)

In the formula, R^{f2} is a C₁₋₄ perfluoroalkyl group, n is an integer of 0 to 3, m is an integer of 0 to 4, and n+m is an integer of 1 to 7.

The perfluoroalkyl group as R^{f2} may be linear or branched. The number of carbon atoms of R^{f2} is preferably 1 to 3.

When n is 0, m is preferably 3 or 4. When n is 1, m is preferably an integer of 2 to 4. When n is 2 or 3, m is preferably 0. n is preferably an integer of 1 to 3.

Specific examples of the compound (6) are as follows. The description in the parentheses after each example is an abbreviated name for the compound.

CF₂=CF-OCF₂CF₂-(OCF₂)₄-OCF₃ (C9PEVE),

CF₂=CF-OCF₂CF₂-(OCF₂)₂-OCF₃ (C7PEVE),

CF₂=CF-(OCF₂CF₂)₂-OCF₂CF₃ (EEAVE),

CF₂=CF-(OCF₂CF₂)₃-OCF₂CF₃ (EEEAVE),

CF₂=CF-OCF₂-OCF₃, CF₂=CF-OCF₂-OCF₂-OCF₃

The second monomer preferably contains TFE. The second monomer preferably consists of TFE and PAVE, or contains TFE and PAVE and further contains other monomer. As the other monomer, the second monomer preferably contains at least one monomer selected from the group consisting of the above-described BO, monomer containing one or more of at least one type of atom selected from the group consisting of a chlorine atom, a bromine atom and an iodine atom, and R_{CN}.

The amount of TFE used is, to the total amount of the second monomer used for production of the second fluorinated polymer, preferably 5 to 80 mol%, more preferably 20 to 75 mol%, further preferably 50 to 75 mol%.

The amount of PAVE used is, to the total amount of the second monomer used for production of the second fluorinated polymer, preferably 20 to 95 mol%, more preferably 25 to 80 mol%, further preferably 25 to 50 mol%.

Also in a case where TFE and PAVE are used as the second monomer, the preferred amounts of TFE and PAVE used are respectively the same.

The amount of TFE and PAVE used is, to the total amount of the second monomer used for production of the second fluorinated polymer, preferably 95.0 to 100.0 mol%, more preferably 97.0 to 100.0 mol%, further preferably 99.0 to 100.0 mol%.

The amount of the other monomer used is, to the amount of the second monomer used, preferably 0 to 5.0 mol%, more preferably 0 to 3 mol%, further preferably 0 to 1 mol%.

The amount of the second monomer used is, preferably 1 to 80 parts by mass, more preferably 1 to 70 parts by mass, further preferably 1 to 65 parts by mass, per 100 parts by mass of the aqueous medium contained in the first aqueous dispersion.

### <Polymerization initiator>

In the method for producing the second fluorinated polymer, it is preferred to polymerized the second monomer in the presence of a polymerization initiator.

The polymerization initiator is preferably an oil-soluble radical initiator, a water-soluble radical initiator or a water-soluble redox catalyst.

Specific examples of the oil-soluble radical initiator include oil-soluble organic peroxides such as tert-butyl peroxypivalate (hereinafter also referred to as "PBPV") and diisopropyl peroxydicarbonate (hereinafter also referred to as "IPP").

Specific examples of the water-soluble radical initiator include water-soluble organic peroxides such as persulfates including ammonium persulfate, potassium persulfate, etc., disuccinic peroxide, bisglutaric peroxide and tert-butyl hydroperoxide (hereinafter also referred to as "TBHP").

The water-soluble redox catalyst is preferably a combination of an oxidizing agent such as bromic acid or its salt, chloric acid or its salt, persulfuric acid or its salt, permanganic acid or its salt, or hydrogen peroxide, and a reducing agent such as sulfurous acid or its salt, hydrogensulfite or its salt, thiosulfuric acid or its salt, an organic acid or an inorganic salt. The persulfate is preferably potassium persulfate or ammonium persulfate. The sulfite is preferably sodium sulfite. The inorganic salt is preferably a combination of sulfate anion, sulfite anion or chloride anion and metal ion. The metal ion is preferably a transition metal ion, such as a manganese, iron, cobalt, nickel, copper, zinc, cerium or silver ion, and is preferably an iron ion. The inorganic salt is preferably iron(II) sulfate.

The polymerization initiator is preferably the oil-soluble radical initiator or the water-soluble radical initiator, more preferably the water-soluble radical initiator, further preferably a persulfate, whereby the fluorinated polymer can be produced more efficiently.

The polymerization initiator may be used in combination of two or more types.

### <Process>

The method for producing the second fluorinated polymer comprises polymerizing the second monomer in the first aqueous dispersion to produce the second fluorinated polymer.

As a method of polymerizing the second monomer, the above-described method of polymerizing the first monomer may be mentioned.

Polymerization of the second monomer is conducted preferably substantially in the absence of an emulsifier having a fluorine atom.

Polymerization of the second monomer is conducted more preferably substantially in the absence of an emulsifier having a fluorine atom and an emulsifier having no fluorine atom.

The emulsifier may be the above-described emulsifier.

"Substantially in the absence of an emulsifier" means, in the method for producing the second fluorinated polymer, a content of the emulsifier of 10 mass ppm or less to the total mass of the first aqueous dispersion, preferably 150 mass ppb or less, more preferably 50 mass ppb or less. The lower limit is 0 mass ppb.

In the method for producing a second fluorinated polymer, particles of the second fluorinated polymer form. Specifically, by the method for producing the second fluorinated polymer, a second aqueous dispersion having the particles of the second fluorinated polymer dispersed in the aqueous medium is obtained,

### (Second fluorinated polymer)

The second fluorinated polymer is a fluorinated polymer produced by the above-described method for producing the second fluorinated polymer.

The second fluorinated polymer may be in the form of particles.

The particles of the second fluorinated polymer may contain the first fluorinated polymer or may not contain the first fluorinated polymer.

The average particle size of the second fluorinated polymer is preferably 500 nm or less, and in view of dispersion stability of the particles, more preferably 400 nm or less, further preferably 350 nm or less, particularly preferably 300 nm or less. The lower limit is preferably 10 nm or more, more preferably 30 nm or more, further preferably 50 nm or more.

The average particle size of the particles of the second fluorinated polymer may be measured in the same manner as for the average particle size of the particles of the first fluorinated polymer.

The number of the particles of the second fluorinated polymer is preferably 0.5×10¹⁴ particles/mL or more, more preferably 1.0×10¹⁴ particles/mL or more, further preferably 2.0×10¹⁴ particles/mL or more, still more preferably 3.0×10¹⁴ particles/mL or more, particularly preferably 5.0×10¹⁴ particles/mL or more. The upper limit is preferably 10.0×10¹⁵ particles/mL or less.

The number of the particles of the second fluorinated polymer is the number of particles per 1 mL of the second aqueous dispersion. The number of the particles may be measured, for example, by the method described in EXAMPLES.

The second fluorinated polymer preferably has no melting point.

"Has no melting point" means that when the melting point of the second fluorinated polymer is measured by a differential scanning calorimeter, no melting peak is observed, and specifically, no melting peak is observed in a temperature range of 150°C or higher (preferably in a temperature range of 150 to 330°C). The glass transition peak does not correspond to the melting peak.

The specific method of measuring the melting point may be the method as described in EXAMPLES.

The 1 mass% thermogravimetric loss temperature of the second fluorinated polymer is preferably 350°C or higher, more preferably 375°C or higher, further preferably 380°C or higher. The upper limit is preferably 600°C or lower.

The 1 mass% thermogravimetric loss temperature may be measured, for example, by using a thermogravimetric analyzer. The specific method of measuring the 1 mass% thermogravimetric loss temperature may be the method described in EXAPLES.

The second fluorinated polymer has units based on the second monomer.

The second fluorinated polymer is as described above, and the preferred embodiment is also the same.

The content of the TFE units is, to all units of the second fluorinated polymer, preferably 5 to 80 mol%, more preferably 20 to 75 mol%, further preferably 50 to 75 mol%.

The content of the PAVE units is, to all units of the second fluorinated polymer, preferably 20 to 95 mol%, more preferably 25 to 80 mol%, further preferably 25 to 50 mol%.

The content of the TFE units and the PAVE units is, to all units of the second fluorinated polymer, preferably 99.0 to 100.0 mol%, more preferably 99.5 to 100.0 mol%, further preferably 99.9 to 100.0 mol%.

The content of the units of the other monomer is, to all units of the second fluorinated polymer, preferably 0 to 90 mol%, more preferably 0 to 80 mol%, further preferably 0 to 70 mol%.

### [Second aqueous dispersion]

The second aqueous dispersion is an aqueous dispersion obtained by the method for producing the second fluorinated polymer.

The second aqueous dispersion is preferably an aqueous dispersion containing particles of the fluorinated polymer (hereinafter also referred to as "specific particles") and the aqueous medium.

In particular, the second aqueous dispersion is preferably an aqueous dispersion containing substantially no water-soluble emulsifier having a fluorine atom and containing the specific particles and the aqueous medium, wherein the number of the specific particles is 0.5×10¹⁴ particles/mL or more, the average particle size of the specific particles is 500 nm or less, the fluorinated polymer has units based on tetrafluoroethylene and units based on a perfluoroalkyl vinyl ether, and the fluorinated polymer has no melting point.

Further, the second aqueous dispersion is preferably an aqueous dispersion containing substantially no water-soluble emulsifier having a fluorine atom and no water-soluble emulsifier having no fluorine atom, and containing the specific particles and the aqueous medium, wherein the number of the specific particles is 0.5×10¹⁴ particles/mL or more, the average particle size of the specific particles is 500 nm or less, the fluorinated polymer has units based on tetrafluoroethylene and units based on a perfluoroalkyl vinyl ether, and the fluorinated polymer has no melting point.

The water-soluble emulsifier having a fluorine atom may be the water-soluble emulsifier having a fluorine atom in the above-described present production method.

"Contains substantially no water-soluble emulsifier having a fluorine atom" means a content of the water-soluble emulsifier having a fluorine atom of 10 mass ppm or less to the total mass of the second aqueous dispersion, preferably 150 mass ppb or less, more preferably 50 mass ppb or less. The lower limit may be 0 mass ppb.

Further, it is also preferred that the second aqueous dispersion contains substantially no water-soluble emulsifier having no fluorine atom, The water-soluble emulsifier having no fluorine atom may be the water-soluble emulsifier having no fluorine atom in the above-described present production method.

"Contains substantially no water-soluble emulsifier having no fluorine atom" means a content of the water-soluble emulsifier having no fluorine atom of 10 mass ppm or less to the total mass of the second aqueous dispersion, preferably 150 mass ppb or less, more preferably 50 mass ppb or less. The lower limit may be 0 mass ppb.

Further, it is also preferred that the second aqueous dispersion contains substantially no water-soluble emulsifier having a fluorine atom and no water-soluble emulsifier having no fluorine atom. The water-soluble emulsifier having a fluorine atom may be the water-soluble emulsifier having a fluorine atom in the above-described present production method. The water-soluble emulsifier having no fluorine atom may be the water-soluble emulsifier having no fluorine atom in the above-described present production method.

"Contains substantially no water-soluble emulsifier having a fluorine atom and no water-soluble emulsifier having no fluorine atom" means a total content of the water-soluble emulsifier having a fluorine atom and the water-soluble emulsifier having no fluorine atom of 10 mass ppm or less to the total mass of the second aqueous dispersion, preferably 150 mass ppb or less, more preferably 50 mass ppb or less. The lower limit may be 0 mass ppb.

### <Specific particles>

The specific particles are preferably particles of the above-described second fluorinated polymer.

In a case where the specific particles contains the second fluorinated polymer, the specific particles may contain the first fluorinated polymer or may not contain the first fluorinated polymer.

The second aqueous dispersion may further contain, in addition to the specific particles, particles of the first fluorinated polymer.

It is preferred that the number of the specific particles is 0.5×10¹⁴ particles/mL or more and that the average particle size of the particles is 500 nm or less.

The preferred embodiments of the number of the specific particles and the average particle size are the same as the preferred embodiments of the number of the particles of the second fluorinated polymer and the average particle size.

The fluorinated polymer produced in the first aqueous dispersion and in the second aqueous dispersion of the present invention, preferably contains the TFE units and the PAVE units and has no melting point.

The TFE units and the PAVE units, and the other units, contained in the fluorinated polymer, may be the units which the first fluorinated polymer and the second fluorinated polymer may contain, and the preferred embodiments (the type and the contents thereof) are the same.

The meaning of "have no melting point" is as described above.

The content of the specific particles is, to the total mass of the second aqueous dispersion, preferably 1 to 50 mass, more preferably 1 to 45 mass%, further preferably 1 to 40 mass%, in view of the dispersion stability of the specific particles.

### <Aqueous medium>

Specific examples of the aqueous medium contained in the second aqueous dispersion are similar to the specific examples of the aqueous medium in the above-described present production method.

The content of the aqueous medium is, to the total mass of the second aqueous dispersion, preferably 50 to 99 mass%, more preferably 50 to 90 mass%, further preferably 50 to 80 mass%, in view of the dispersion stability of the specific particles.

### <Solid composition>

A solid composition which contains the fluorinated polymer having no melting point, produced in the first aqueous dispersion or in the second aqueous dispersion of the present invention;
wherein the solid composition has units based on tetrafluoroethylene,
the content of an emulsifier having a fluorine atom is 1500 mass ppb or less to the total mass of the solid composition,
the content of a compound represented by the formula (S1) is 1500 mass ppb or less to the total mass of the solid composition, and
the content of a compound represented by the formula (S3) is 100 mass ppb or less to the total mass of the solid composition:

   H-(CF₂)ₙ₁-COOM^{S} (S1)
in the formula (S1),
n1 is an integer of 3 to 13, and
M^{S} is a hydrogen atom, Na, K or NH₄;

   H-(CF₂)ₙ₂-SO₃M^{S} (S3)

   in the formula (S3),
n2 is an integer of 4 to 10, and
M^{S} is a hydrogen atom, Na, K or NH₄.

The method of measuring the respective contents may be the method described in

### EXAMPLES.

The present solid composition refers to a composition having a solid content mass of 99 mass% or more.

The solid content mass is calculated in accordance with the following method based on the masses before and after heating.

2.0 g of the solid composition is heated at 170°C for 20 minutes, and the mass of the residue is weighed to calculated the solid content mass in accordance with the following formula.

Solid content mass (mass%) = 100×(mass of residue)/(mass of solid composition)

The present solid composition is obtained preferably agglomerating the fluorinated polymer produced in the above-described first aqueous dispersion or second aqueous dispersion.

The preferred embodiment of the fluorinated polymer contained in the present solid composition is the same as the preferred embodiment of the fluorinated polymer contained in the above-described first aqueous dispersion or second aqueous dispersion.

That is, the fluorinated polymer contained in the present solid composition is preferably the above-described first fluorinated polymer or second fluorinated polymer. The second fluorinated polymer may contain the first fluorinated polymer.

The present solid composition contains the first fluorinated polymer or second fluorinated polymer, having units based on TFE and having no melting point. The first fluorinated polymer or second fluorinated polymer having no melting point preferably contains units based on TFE and units based on PAVA.

The content of the fluorinated polymer is, to the total mass of the present solid composition, preferably 99.0 to 100 mass%, more preferably 99.5 to 100 mass%, further preferably 99.8 to 100 mass%.

In the present solid composition, the content of the emulsifier having a fluorine atom is, to the total mass of the solid composition, 1500 mass ppb or less, preferably 1000 mass ppb or less, more preferably 900 mass ppb or less, particularly preferably 850 mass ppb or less.

Specific examples of the emulsifier having a fluorine atom are as described above.

The present solid composition contains substantially no emulsifier having no fluorine atom. "Contains substantially no emulsifier having no fluorine atom" means a content of the emulsifier having no fluorine atom of 10 mass ppm or less to the total mass of the solid composition, preferably 5 mass ppm or less, more preferably 150 mass ppb or less, further preferably 50 mass ppb or less. The lower limit is 0 mass ppb.

Specific examples of the emulsifier having no fluorine atom are as described above.

The present solid composition has a content of the compound represented by the formula (S1) of, to the total mass of the solid composition, 1500 mass ppb or less, preferably 1000 mass ppb or less, more preferably 900 mass ppb or less, particularly preferably 850 mass ppb or less.

The present solid composition has a content of the compound represented by the formula (S3) of, to the total mass of the solid composition, 100 mass ppb or less, preferably 50 mass ppb or less, more preferably 25 mass ppb or less, further preferably 10 mass ppb or less, particularly preferably 0 mass ppb.

When no emulsifier is used at the time of production of the first fluorinated polymer contained in the first aqueous dispersion and at the time of production of the second fluorinated polymer contained in the second aqueous dispersion, the amounts of the compounds represented by the formula (S1) and the formula (S3) generated are suppressed, and thus the contents of these compounds in the present solid composition can easily be adjusted.

The present solid composition has a metal content to the total amount of the solid content of the solid composition of preferably less than 50 mass ppm, more preferably 10 mass ppm or less, particularly preferably 5 mass ppm or less.

By the metal content being less than 50 mass ppm, the resulting solid composition will have more improved surface smoothness.

### <Application>

The second aqueous dispersion does not require an emulsifier, such as the emulsifier having a fluorine atom, as described above, and thus it can easily be converted to a dispersion of an organic solvent such as N-methylpyrrolidone or acetone by solvent replacement.

For example, the second aqueous dispersion is mixed with an organic solvent and dehydrated by evaporation or over anhydrous sodium sulfate to obtain a dispersion of the organic solvent.

In the second aqueous dispersion, the fluorinated polymer can stably be dispersed, even though no emulsifier is contained. Thus, the second aqueous dispersion can suitably be applied to coatings, binders, etc.

Further, by agglomerating the first fluorinated polymer from the first aqueous dispersion, or by agglomerating the specific particles from the second aqueous dispersion, solids of the specific particles can be obtained. The solids of the specific particles obtained by agglomeration may be properly molded by a known method. The molding method may, for example, be injection molding, extrusion, co-extrusion, blow molding, compression molding, inflation molding, transfer molding or calendering.

The agglomeration method may be freeze agglomeration, acid agglomeration, base agglomeration, mechanical agglomeration or agglomeration by a coagulant, but is not limited thereto.

In the case of freeze agglomeration, the agglomeration temperature is preferably - 20 to 0°C. The agglomeration time is preferably 1 hour or more, more preferably 2 hours or more.

In the case of acid agglomeration, preferred is a method of adding a solution containing an acid to the second aqueous dispersion. The acid added may, for example, be hydrochloric acid, nitric acid, sulfuric acid, oxalic acid or hydrofluoric acid, and is preferably nitric acid. The concentration of the acid in the solution containing the acid is preferably 0.1 to 50 mass%, more preferably 1 to 30 mass%, further preferably 1 to 10 mass%.

In the case of base agglomeration, preferred is a method of adding a solution containing a base to the second aqueous dispersion. The base added may, for example, be sodium hydroxide, potassium hydroxide or ammonium carbonate, and is preferably sodium hydroxide. The concentration of the base in the solution containing the base is preferably 0.1 to 50 mass%, more preferably 1 to 30 mass%, further preferably 1 to 10 mass%.

In the case of agglomeration by a coagulant, a known coagulant may be used. The known coagulant may be an aluminum salt, a calcium salt or a magnesium salt. Specifically, aluminum sulfate, alum represented by the formula M'Al(SO₄)₂·12H₂O wherein M' is a monovalent cation other than lithium, calcium nitrate and magnesium sulfate may be mentioned, alum is preferred, and potassium alum wherein M is potassium is more preferred.

The agglomeration method is preferably base agglomeration, whereby agglomeration is particularly likely to proceed.

### EXAMPLES

Now, the present invention will be described in further detail with reference to Examples. Ex. 1 to 5 and 7 to 11 are Examples of the present invention, and Ex. 6 is Comparative Example. However, it should be understood that the present invention is by no means restricted thereto.

### [Measurement and evaluation methods]

The measurement methods and evaluation methods are as follows.

### <Average particle size of particles of first fluorinated polymer and second fluorinated polymer>

The first aqueous dispersion in each Ex. to be described below was deaerated at 25°C for 5 minutes and pressurized with nitrogen gas to 0.2 MPaG and then purged to be returned to the atmospheric pressure, to obtain a measurement sample. The average particle size of the obtained measurement sample was measured by a dynamic light scattering particle size distribution measuring apparatus (ELSZ manufactured by Otsuka Electronics Co., Ltd.) with the accumulation number set to 100, and taken as the average particle size of the particles in each aqueous dispersion.

The average particle size of the particles of the first fluorinated polymer in the after-described material dispersion B to be described below, measured by the same method as for the first aqueous dispersion, was the same as the average particle size of the particles of the first fluorinated polymer in the first aqueous dispersion.

### <Number of particles of first fluorinated polymer and second fluorinated polymer>

The number of the particles Np (particles/mL) of the first fluorinated polymer in the first aqueous dispersion, and the number of the particles Np (particles/mL) of the second fluorinated polymer in the second aqueous dispersion, were calculated in accordance with the following formula.$Np \left(particles/mL\right) = \left[\left(X/100\right)/\left(1-X/100\right)\right] / \left[4/3\times π\times \left\{{\left(Dp/2\right)}^{3}\right\}\times ρ\right]$
X: the solid content concentration (mass%) of the first aqueous dispersion, or the solid content concentration (mass%) of the second aqueous dispersion
π: pi
Dp: the average particle size (m) of the particles of the first fluorinated polymer in the first aqueous dispersion, or the average particle size (m) of the particles of the second fluorinated polymer in the second aqueous dispersion
ρ: the specific gravity of the first fluorinated polymer, or the specific gravity of the second fluorinated polymer (both ρ=2.04×10⁵) (g/m³)

### (Solid content concentration of first aqueous dispersion and second aqueous dispersion)

2.0 g of the first aqueous dispersion or the second aqueous dispersion in each Ex. to be described below was heated at 170°C for 20 minutes, and the mass (g) of the residue was weighed to calculate the solid content concentration in accordance with the following formula. 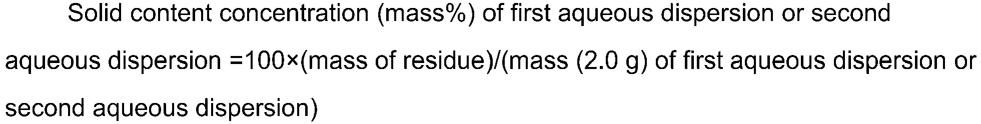 Solid content concentration (mass%) of first aqueous dispersion or second aqueous dispersion =100×(mass of residue)/(mass (2.0 g) of first aqueous dispersion or second aqueous dispersion)

### <Ratio of units in first fluorinated polymer and second fluorinated polymer>

The ratios of the units in the fluorinated polymer were obtained by ¹⁹F-NMR analysis and infrared absorption analysis.

### <Melting point>

The first aqueous dispersion or the second aqueous dispersion in each of Ex. to be described below, was freeze-agglomerated and subjected to filtration to obtain the first fluorinated polymer or the second fluorinated polymer. 5 mg of the obtained first fluorinated polymer or second fluorinated polymer was weighed in an aluminum pan as a sample and heated in the air atmosphere from 20°C to 360°C at a heating rate of 10°C/min by DSC600 manufactured by Hitachi High-Tech Corporation, and whether a melting peak was observed or not was confirmed.

### <1 mass% thermogravimetric loss temperature>

The first aqueous dispersion or the second aqueous dispersion in each of Ex. to be described below, was freeze-agglomerated and subjected to filtration to obtain the first fluorinated polymer or the second fluorinated polymer. 10 mg of the obtained first fluorinated polymer or second fluorinated polymer was weighed in an aluminum pan as a sample and heated in the air atmosphere from 40°C to 550°C at a heating rate of 10°C/min by STA200 manufactured by Hitachi High-Tech Corporation, and from the obtained weight loss, the 1% thermogravimetric loss temperature was obtained.

### <Content of compound represented by formula (S1) and compound represented by formula (S3) in aqueous dispersion>

### (Preparation of measurement sample)

The aqueous dispersion and the material dispersion were freeze-agglomerated at -20°C. Upon defrosting at room temperature, the polymer was precipitated, and the aqueous phase was recovered by filtration. With respect to the content of the compound represented by the formula (S1) contained in the aqueous solution, the contents of the compounds of the formula (S1) wherein n1=3 to 13 were obtained by conversion to a corresponding perfluorocarboxylic acid with the same number of carbon atoms. With respect to the content of the compound represented by the formula (S3) in the obtained aqueous phase, the contents of the compounds of the formula (S3) wherein n2=4 to 10 were obtained by conversion to a corresponding perfluorosulfonic acid with the same number of carbon atoms.

Specifically, first, methanol standard solutions of a perfluorocarboxylic acid and a perfluorosulfonic acid, each having a known concentration of 1 to 180 ng/g, were prepared, each at 5 concentrations. From the respective sample concentrations and the integrated peak areas, by first-order approximation, a and a' were obtained from the formula (A1) and the formula (A1'). $A = a \times X$ (A1)
A: peak area of perfluorocarboxylic acid, X: concentration (ng/g) of perfluorocarboxylic acid ${A}^{′} = {a}^{′} \times {X}^{′}$ (A1')
A': peak area of perfluorosulfonic acid, X': concentration (ng/g) of perfluorosulfonic acid

Measurement apparatus and measurement conditions are shown in the following Table 1.

**[Table 1]**

| LC unit | | |
|---|---|---|
| Apparatus | CTO-40C manufactured by Shimadzu Corporation | |
| Column | Shim-pack Velox SP-C18 2.7 µm, 150 mm × 2.1 mm | |
| Mobile phase | A 20mM CH₃COONH₄/H₂O | |
| | B CH₃OH | |
| | 0→0.5 min | A:B=80:20→A:B=75:25 Linear gradient |
| | 0.5→3.5 min | A:B=75:25→A:B=70:30 Linear gradient |
| | 3.5→5.0 min | A:B=70:30→A:B=40:60 Linear gradient |
| | 5.0→9.5 min | A:B=40:60→A:B=20:80 Linear gradient |
| | 9.5→10.0 min | A:B=20:80→A:B=2:98 Linear gradient |
| | 10.0→20.0 min | A:B=2:98 |
| | 20.0→20.1 min | A:B=2.0:98.0→A:B=80:20 Linear gradient |
| | 20.1→25.0 min | A:B=80:20 |
| Flow rate | 0.25mL/min | |
| Column temperature | 40°C | |
| Sample injection amount | 2 µL | |

| MS unit | | |
|---|---|---|
| Apparatus | LCMS-8060NX manufactured by Shimadzu Corporation | |
| Measurement mode | MRM (Multiple Reaction Monitoring) | |
| | ESI (Electrospray ionization) | |
| Ionization method | Negative mode | |

MRM measurement parameters are shown in the following Tables 2 and 3.

**[Table 2]**

| Compound | Number of carbon atoms | Precursor | Product |
|---|---|---|---|
| Perfluorobutanoic acid | 4 | 213 | 169 |
| Perfluoropentanoic acid | 5 | 263 | 219 |
| Perfluorohexanoic acid | 6 | 313 | 269 |
| Perfluoroheptanoic acid | 7 | 363 | 319 |
| Perfluorooctanoic acid | 8 | 413 | 369 |
| Perfluorononanoic acid | 9 | 463 | 419 |
| Perfluorodecanoic acid | 10 | 513 | 469 |
| Perfluoroundecanoic acid | 11 | 563 | 519 |
| Perfluorododecanoic acid | 12 | 613 | 569 |
| Perfluorotridecanoic acid | 13 | 663 | 619 |
| Perfluorotetradecanoic acid | 14 | 713 | 669 |

**[Table 3]**

| Compound | Number of carbon atoms | Precursor | Product |
|---|---|---|---|
| Perfluorobutanesufononic acid | 4 | 299 | 99 |
| Perfluoropentanesulfonic acid | 5 | 349 | 99 |
| Perfluorohexanesulfonic acid | 6 | 399 | 99 |
| Perfluoropentanesulfonic acid | 7 | 449 | 99 |
| Perfluorooctanesulfonic acid | 8 | 499 | 99 |
| Perfluorononanesulfonic acid | 9 | 549 | 99 |
| Perfluorodecanesulfonic acid | 10 | 599 | 99 |

Specifically, first, by the above liquid chromatography mass spectroscope, the compound represented by either the formula (S1) or the formula (S3) contained in the aqueous phase was measured. Peak areas of the compounds represented by the formula (S1) and the formula (S3) with the respective number of carbon atoms were obtained by MRM method.

NRM measurement parameters are shown in the following Tables 4 and 5.

**[Table 4]**

| Compound represented by formula (S1) (value of n1 in formula (S1)) | Number of carbon atoms | Precursor | Product |
|---|---|---|---|
| 3 | 4 | 195 | 131 |
| 4 | 5 | 245 | 181 |
| 5 | 6 | 295 | 231 |
| 6 | 7 | 345 | 281 |
| 7 | 8 | 395 | 331 |
| 8 | 9 | 445 | 381 |
| 9 | 10 | 495 | 431 |
| 10 | 11 | 545 | 481 |
| 11 | 12 | 595 | 531 |
| 12 | 13 | 645 | 581 |
| 13 | 14 | 695 | 631 |

**[Table 5]**

| Compound represented by formula (S3) (value of n2 in formula (S3)) | Number of carbon atoms | Precursor | Product |
|---|---|---|---|
| 4 | 4 | 281 | 99 |
| 5 | 5 | 331 | 99 |
| 6 | 6 | 381 | 99 |
| 7 | 7 | 431 | 99 |
| 8 | 8 | 481 | 99 |
| 9 | 9 | 531 | 99 |
| 10 | 10 | 581 | 99 |

The contents of the compound represented by the formula (S1) and the compound represented by the formula (S3) were calculated respectively from the formula (A2) and the formula (A2'). a in the formula (A2) represents a obtained from the formula (A1), and a' in the formula (A2') represents a' obtained from the formula (A1'). $XCm = ACm / a$ (A2)
XCm: content (ng/g) of the compound represented by the formula (S1) with a number of carbon atoms (n+1) in aqueous phase
ACm: peak area of the compound represented by the formula (S1) with a number of carbon atoms (n+1) in aqueous phase ${XCm}^{′} = {ACm}^{′} {/ a}^{′}$ (A2')
XCm': content (ng/g) of the compound represented by the formula (S3) with a number of carbon atoms n in aqueous phase
ACm': peak area of the compound represented by the formula (S3) with a number of carbon atoms n in aqueous phase

The quantitative determination limit in this measurement is 1 ng/g.

### <Method of measuring content of compound represented by the formula (S1) and content of the compound represented by the formula (S3) contained in solid composition>

### (Preparation of measurement sample)

The solid composition obtained in each Ex. to be described below was freeze-ground by a freeze-grinding machine Freezer Mill 6775 (manufactured by SPEC) under the following conditions. When freeze-ground, the solid composition was preliminarily mixed with dibutylhydroxytoluene (BHT) in an amount corresponding to 10 mass% of the total mass of the solid composition to obtain a ground powder. The freeze-grinding conditions were such that the solid composition: 3 g, BHT: 0.3 g, run time: 5 mins, rate:15 cps, and cycle: 3.

5 mL of methanol was added to 0.25 g of the obtained ground powder, and the mixture was subjected to ultrasonic treatment at 50°C for 2 hours and then subjected to centrifugal separation (5000 rpm, 5 minutes) to settle the fluorinated polymer, and the resulting supernatant was taken as an extract.

With respect to the content of the compound represented by the formula (S1) contained in each extract, the contents of the compounds of the formula (S1) wherein n1=3 to 13 were obtained by conversion to a corresponding perfluorocarboxylic acid with the same number of carbon atoms. With respect to the content of the compound represented by the formula (S3) in the each extract, the contents of the compounds of the formula (S3) wherein n2=4 to 10 were obtained by conversion to a corresponding perfluorosulfonic acid with the same number of carbon atoms.

Specifically, first, methanol standard solutions of a perfluorocarboxylic acid and a perfluorosulfonic acid, each having a known concentration of 1 to 180 ng/g, were prepared, each at 5 concentrations. From the respective sample concentrations and the integrated peak areas, by first-order approximation, a and a' were obtained from the formula (A1) and the formula (A1'). $A = a \times X$ (A1)
A: peak area of perfluorocarboxylic acid, X: concentration (ng/g) of perfluorocarboxylic acid ${A}^{′} = {a}^{′} \times {X}^{′}$ (A1')
A': peak area of perfluorosulfonic acid, X': concentration (ng/g) of perfluorosulfonic acid

Measurement apparatus and measurement conditions are as shown in the above Table 1.

MRM measurement parameters are as shown in the above Table 2.

Specifically, first, by the above liquid chromatography mass spectroscope, peak areas of the compounds represented by the formula (S1) and the formula (S3) contained in each extract were measured.

The contents of the compound represented by the formula (S1) and the compound represented by the formula (S3) were calculated respectively from the formula (A2) and the formula (A2'). a in the formula (A2) represents a obtained from the formula (A1), and a' in the formula (A2') represents a' obtained from the formula (A1'). $XCm = ACm / a$ (A2)
XCm: content (ng/g) of the compound represented by the formula (S1) with a number of carbon atoms (n+1) in extract
ACm: peak area of the compound represented by the formula (S1) with a number of carbon atoms (n+1) in extract ${XCm}^{′} = {ACm}^{′} {/ a}^{′}$ (A2')
XCm': content (ng/g) of the compound represented by the formula (S3) with a number of carbon atoms n in extract
ACm': peak area of the compound represented by the formula (S3) with a number of carbon atoms n in extract

The quantitative determination limit in this measurement is 1 ng/g.

The content (ZCm) of the compound of the formula (S1) in the solid content to the total mass of the solid content was obtained from the following formula (A3). $ZCm = XCm \times ρ 1 \times La / W 1$ (A3)
ZCm: content of the compound represented by the formula (S1) with a number of carbon atoms (n+1) contained in solid content
ρ1: density of extraction solvent (methanol in each Ex.)
La: volume of extraction solvent (5 mL in each Ex.)
W1: mass of sample used for extraction (2.5 g of solid content in each Ex.)

The content (ZCm') of the compound of the formula (S3) in the solid content to the total mass of the solid content was obtained from the following formula (A4). $ZCm ′ = XCm ′ \times ρ 1 \times La / W 1$ (A4)
ZCm': content of the compound represented by the formula (S3) with a number of carbon atoms n contained in the solid content
ρ1: density of extraction solvent (methanol in each Ex.)
La: volume of extraction solvent (5 mL in each Ex.)
W1: mass of sample used for extraction (2.5 g of solid content in each Ex.)

### <Quantitative determination of fluorinated emulsifier>

The solid composition obtained in each Ex. was was freeze-ground by a freeze-grinding machine Freezer Mill 6775 (manufactured by SPEX) under the following conditions. When freeze-ground, the solid content was preliminarily mixed with dibutylhydroxytoluene (BHT) in an amount corresponding to 10 mass% of the total mass of the solid content to obtain a ground powder. The freeze-grinding conditions were such that the solid composition: 3 g, BHT: 0.3 g, run time: 5 mins, rate: 15 cps, and cycle: 3.

5 mL of methanol was added to 0.25 g of the obtained ground powder, and the mixture was subjected to ultrasonic treatment at 50°C for 2 hours and then subjected to centrifugal separation (5000 rpm, 5 minutes) to settle the fluorinated polymer, and the resulting supernatant was taken as an extract. The obtained extract was subjected to LC/MS/MS measurement. With respect to the emulsifier having a fluorine atom in the extract, measurement was conducted using a liquid chromatograph mass spectrometer. The measurement equipment configuration and the LC-MS measurement conditions are shown in Table 1. Using an aqueous solution of the emulsifier having a fluorine atom having a known concentration, methanol solutions at 5 or more contents were prepared, and LC/MS analysis was conducted on the methanol solutions at the respective contents. The relation between the content and the area at the corresponding content was plotted to draw an analytical curve. Using the obtained analytical curve, the area of the LC/MS chromatogram of the emulsifier having a fluorine atom in the extract was converted to the content of the emulsifier having a fluorine atom.

MRM measurement parameters are properly selected depending upon the structure of the emulsifier having a fluorine atom to be measured. The MRM parameters may be literature values or may be calculated by an LC-MS apparatus. Determination of the MRM parameters by an LC-MS apparatus are specifically as follows. Using an LC/MS apparatus (manufactured by Shimadzu Corporation, LCMS-8060NX), product ion search is selected, the molecular weight of the emulsifier having a fluorine atom to be measured is input, and precursor ion selection, precursor adjustment, voltage optimization, and product m/z optimization are performed. The calculated MRM measurement parameters are used.

### <Quantitative determination of emulsifier having fluorine atom contained in solid composition>

Specifically, first, methanol standard solutions of the emulsifier having a fluorine atom, having a known concentration of 1 to 180 ng/g, were prepared, at 5 concentrations. From the respective sample concentrations and the integrated peak areas, by first-order approximation, a" was obtained from the formula (A1). ${A}^{"} = {a}^{"} \times X$ (A1")

A": peak area of emulsifier, X: concentration (ng/g) of emulsifier

The amount of the emulsifier contained in the extract was calculated from the formula (A2"). a" in the formula (A") represents a" obtained from the formula (A"). ${XCm}^{"} = {ACm}^{"} {/ a}^{"}$ (A2")
XCm": content (ng/g) of the emulsifier in extract
ACm": peak area of the emulsifier in extract

The quantitative determination limit in this measurement is 25 ng/g.

The content (ZCm") of the emulsifier in the solid composition to the total mass of the solid composition was obtained from the following formula (A3"). $ZCm " = XCm " \times ρ 1 \times La / W 1$ (A3")
ZCm": content of the emulsifier contained in the solid composition
ρ1: density of extraction solvent (methanol in each Ex.)
La: volume of extraction solvent (5 mL in each Ex.)
W1: mass of sample used for extraction (2.5 g of solid content in each Ex.)

### <Contents of metal elements contained in solid composition>

0.5 g of the solid content obtained in each Ex. to be described below, was collected in a tared platinum crucible. The solid content was heated by an incineration apparatus (manufactured by Nihon BUCHI K.K., Wet Digester B-440, high temperature electric heating furnace) at 400°C for 10 minutes, then at 470°C for 20 minutes, at 500°C for 15 minutes ad at 550°C for 60 minutes to incinerate the solid content.

To the obtained ash, sulfuric acid (1+1) (manufactured by KANTO CHEMICAL CO., LTD., sulfuric acid Ultrapur, 1 mL) was added, followed by fuming treatment on a hot plate. Further, sulfuric acid (1+1) (1 mL) and ultrapure water (9 mL) were added to obtain a sample liquid. With respect to the obtained sample liquid, metal elements were measured by ICP-MS and quantitatively determined by external calibration method.

The metal elements to be measured are 29 metal elements (Li, Be, Na, Mg, Al, K, Ca, Ti, V, Cr, Mn, Fe, Co, Ni, Cu, Zn, Ga, Rb, Sr, Zr, Mo, Ag, Cd, In, Sn, Cs, Ba, Pb and Bi).

### [Ex. 1]

In a 3.2 L stainless steel pressure resistant reactor, ultrapure water (1774 g), a sodium 2-acrylamide-2-methyl-1-propanesulfonate (NaAAMPS, corresponding to the compound X) 50 mass% aqueous solution (15 µL, NaAAMPS: 7.5 mg), PMVE (105 g) and TFE (22 g) were added and heated to 80°C with stirring at 385 rpm. The internal pressure of the reactor when the temperature reached 80°C was 1.4 MPaG. Then, an aqueous ammonium persulfate solution (2.5 mass%, 10 g) was added to initiate polymerization. Since the pressure in the reactor decreased as the polymerization started, TFE was added to keep a constant pressure. This operation was repeatedly conducted and when the amount of TFE added after the start of the polymerization reached 37 g, 10 g of PMVE was injected. Thereafter, every injection of 12 g of TFE, 10 g of PMVE was injected. When the amount of TFE added after the start of the polymerization reached 133 g, addition of TFE and PMVE was terminated, the internal temperature of the reactor was decreased to 10°C to terminate the polymerization, the gas remaining in the reactor was recovered, and the liquid was withdrawn to obtain first aqueous dispersion A1. The amounts of the monomers added before the start of the polymerization were 22 g of TFE and 105 g of PMVE. The amounts of the monomers added after the start of the polymerization were 133 g of TFE and 80 g of PMVE. The total amount of TFE added was 155 g and the total amount of PMVE added was 185 g.

The average particle size of particles of first fluorinated polymer A1 in the first aqueous dispersion A1 was 79.6 nm, the number of the particles of the first fluorinated polymer A1 was 2.6×10¹⁴ particles/mL, and the solid content concentration of the first aqueous dispersion A1 was 12.4 mass%.

The first aqueous dispersion A1 was freeze-agglomerated and subjected to filtration, and the obtained first fluorinated polymer A1 was washed with ultrapure water and vacuum-dried at 100°C. The obtained first fluorinated polymer A1 was analyzed by NMR and as a result, PMVE/TFE=33/67 (molar ratio). The 1 mass% thermogravimetric loss temperature of the first fluorinated polymer A1 was 412°C.

The first fluorinated polymer A1 had no melting point.

### [Ex. 2]

First aqueous dispersion A2 was obtained in the same manner as in Ex. 1 except that the amount of the NaAAMPS 50 mass% aqueous solution added was changed to 30 µL (NaAAMPS:15 mg).

The average particle size of particles of first fluorinated polymer A2 in the first aqueous dispersion A2 was 64.3 nm, the number of the particle of the first fluorinated polymer A2 was 5.0×10¹⁴ particles/mL, and the solid content concentration of the first aqueous dispersion A2 was 12.4 mass%.

The first aqueous dispersion A2 was freeze-agglomerated and subjected to filtration, and the obtained first fluorinated polymer A2 was washed with ultrapure water and vacuum dried at 100°C. The obtained first fluorinated polymer A2 was analyzed by NMR and as a result, PMVE/TFE=33/67 (molar ratio). The 1 mass% thermogravimetric loss temperature of the first fluorinated polymer A2 was 412°C.

The first fluorinated polymer A2 had no melting point.

### [Ex. 3]

Polymerization was initiated in the same manner as in Ex. 1 except that the amount of the NaAAMPS 50 mass% aqueous solution added was changed to 45 µL (NaAAMPS: 22.5 mg). Since the pressure in the reactor decreased as the polymerization started, TFE was added to keep a constant pressure. This operation was repeatedly conducted and when the amount of TFE added after the start of the polymerization reached 37 g, 10 g of PMVE was injected. Thereafter, every injection of 12 g of TFE, 10 g of PMVE was injected. When the amount of TFE added after the start of the polymerization reached 325 g, addition of TFE and PMVE was terminated, the internal temperature of the reactor was decreased to 10°C to terminated the polymerization, the gas remaining in the reactor was recovered, and the liquid was withdrawn to obtain first aqueous dispersion A3. The amounts of the monomers added before the start of the polymerization were 22 g of TFE and 105 g of PMVE. The amounts of the monomers added after the start of the polymerization were 325 g of TFE and 240 g of PMVE. The total amount of TFE added was 347 g and the total amount of PMVE added was 345 g.

The average particle size of particles of first fluorinated polymer A3 in the first aqueous dispersion A3 was 68.2 nm, the number of the particles of the first fluorinated polymer A3 was 9.8×10¹⁴ particles/mL, and the solid content concentration of the first aqueous dispersion A3 was 24.9 mass%.

The first aqueous dispersion A3 was freeze-agglomerated and subjected to filtration, and the obtained first fluorinated polymer A3 was washed with ultrapure water and vacuum-dried at 100°C. The obtained first fluorinated polymer A3 was analyzed by NMR and as a result, PMVE/TFE=33/67 (molar ratio). The 1 mass% thermogravimetric loss temperature of the first fluorinated polymer A3 was 412°C.

The first fluorinated polymer A3 had no melting point.

### [Ex. 4]

Polymerization was initiated in the same manner as in Ex. 1 except that the NaAAMPS 50 mass% aqueous solution was changed to an aqueous sodium vinylsulfonate (VSA) 25 mass% aqueous solution (17 µL). Since the pressure in the reactor decreased as the polymerization started, TFE was added to keep a constant pressure. This operation was repeatedly conducted and when the amount of TFE added after the start of the polymerization reached 37 g, 10 g of PMVE was injected. Thereafter, every injection of 12 g of TFE, 10 g of PMVE was injected. When the amount of TFE added after the start of the polymerization reached 74 g, addition of TFE and PMVE was terminated, the internal temperature of the reactor was decreased to 10°C to terminated the polymerization, the gas remaining in the reactor was recovered, and the liquid was withdrawn to obtain first aqueous dispersion C1. The amounts of the monomers added before the start of the polymerization were 22 g of TFE and 105 g of PMVE. The amounts of the monomers added after the start of the polymerization were 74 g of TFE and 40 g of PMVE. The total amount of TFE added was 96 g and the total amount of PMVE added was 145 g.

The average particle size of particles of first fluorinated polymer C1 in the first aqueous dispersion C1 was 86.9 nm, the number of the particles of the first fluorinated polymer C1 was 0.9×10¹⁴ particles/mL, and the solid content concentration of the first aqueous dispersion C1 was 6.4 mass%.

The first aqueous dispersion C1 was freeze-agglomerated and subjected to filtration, and the obtained first fluorinated polymer C1 was washed with ultrapure water and vacuum-dried at 100°C. The obtained first fluorinated polymer C1 was analyzed by NMR and as a result, PMVE/TFE=31.8/68.2 (molar ratio). The 1 mass% thermogravimetric loss temperature of the first fluorinated polymer C1 was 415°C.

The first fluorinated polymer C1 had no melting point.

### [Ex. 5]

Polymerization was initiated in the same manner as in Ex. 1 except that the NaAAMPS 50 mass% aqueous solution was changed to sodium styrene vinylsulfonate (NaSS, 7 mg). Since the pressure in the reactor decreased as the polymerization started, TFE was added to keep a constant pressure. When the amount of TFE added after the start of the polymerization reached 37 g, the internal temperature of the reactor was decreased to 10°C to terminated the polymerization, the gas remaining in the reactor was recovered, and the liquid was withdrawn to obtain aqueous dispersion C2. The amounts of the monomers added before the start of the polymerization were 22 g of TFE and 105 g of PMVE. The amounts of the monomers added after the start of the polymerization were 37 g of TFE and 0 g of PMVE. The total amount of TFE added was 59 g and the total amount of PMVE added was 105 g.

The average particle size of particles of first fluorinated polymer C2 in the aqueous dispersion C2 was 78.1 nm, the number of the particles of the first fluorinated polymer C2 was 0.6×10¹⁴ particles/mL, and the solid content concentration of the aqueous dispersion C2 was 3.0 mass%.

The aqueous dispersion C2 was freeze-agglomerated and subjected to filtration, and the obtained fluorinated polymer C2 was washed with ultrapure water and vacuum-dried at 100°C. The obtained fluorinated polymer C2 was analyzed by NMR and as a result, PMVE/TFE=31.8/68.2 (molar ratio). The 1 mass% thermogravimetric loss temperature of the fluorinated polymer C2 was 363°C.

The first fluorinated polymer C2 had no melting point.

### [Ex. 6]

In a 2.1 L stainless steel pressure resistant reactor, ultrapure water (1004 g), a 30 mass% aqueous solution (80.1 g) of C₂F₅OCF₂CF₂OCF₂COONH₄ as the water-soluble emulsifier having a fluorine atom, a 5 mass% aqueous solution (10.49 g) of disodium hydrogen phosphate dodecahydrate, PMVE (72 g) and TFE (14 g) were added and heated to 80°C with stirring at 600 rpm. The internal pressure of the reactor when the temperature reached 80°C was 1.2 MPaG. Then, an aqueous ammonium persulfate solution (1.0 mass%, 20 g) was added to initiate polymerization. Since the pressure in the reactor decreased as the polymerization started, TFE and PMVE were further added to keep a constant pressure pf 1.2 MPa [gauge]. When the amount of TFE added after the start of the polymerization reached 160 g and the amount of PMVE added after the start of the polymerization reached 133 g, the reactor was cooled to complete the polymerization. The polymerization time was 262 minutes. The gas remaining in the reactor was recovered, and the liquid was withdrawn to obtain aqueous dispersion C3. The amounts of the monomers added before the start of the polymerization were 14 g of TFE and 72 g of PMVE. The amounts of the monomers added after the start of the polymerization were 160 g of TFE and 133 g of PMVE. The total amount of TFE added was 174 g and the total amount of PMVE added was 205 g.

The average particle size of particles of fluorinated polymer C3 in the aqueous dispersion C3 was 84.2 nm, the number of the particles of the fluorinated polymer C3 was 3.1×10¹⁴ particles/mL, and the solid content concentration of the aqueous dispersion C3 was 21.1 mass%.

The aqueous dispersion C3 was freeze-agglomerated and subjected to filtration, and the obtained fluorinated polymer C3 was washed with ultrapure water and vacuum-dried at 100°C. The obtained fluorinated polymer C3 was analyzed by NMR and as a result, PMVE/TFE=34.2/65.8 (molar ratio). The 1 mass% thermogravimetric loss temperature of the fluorinated polymer C3 was 406°C.

The first fluorinated polymer C3 had no melting point.

### [Ex. 7]

### <Production of material dispersion A >

In a 2.2 L stainless steel pressure resistant reactor, ultrapure water (1206 g), a NaAAMPS 50 mass% aqueous solution (22 µL, NaAAMPS: 10 mg), PMVE (72 g) and TFE (15 g) were added and heated to 90°C with stirring at 600 rpm. The internal pressure of the reactor when the temperature reached 90°C was 1.4 MPaG. Then, an aqueous ammonium persulfate solution (2.5 mass%, 4 g) was added to initiate polymerization. Since the pressure in the reactor decreased as the polymerization started, TFE was added to keep a constant pressure. This operation was repeatedly conducted and when the amount of TFE added after the start of the polymerization reached 25 g, addition of TFE was terminated, the internal temperature of the reactor was decreased to 10°C to terminated the polymerization, the gas remaining in the reactor was recovered, and the liquid was withdrawn to obtain material dispersion A (first aqueous dispersion A4). The amounts of the monomers added before the start of the polymerization were 15 g of TFE and 72 g of PMVE. The amounts of the monomers added after the start of the polymerization were 25 g of TFE and 0 g of PMVE. The total amount of TFE added was 40 g and the total amount of PMVE added was 72 g.

The average particle size of particles of first fluorinated polymer A4 in the material dispersion A was 43.5 nm, the number of the particles of the first fluorinated polymer A4 was 3.9×10¹⁴ particles/mL, and the solid content concentration of the material dispersion A was 3.3 mass%.

The material dispersion A1 was freeze-agglomerated and subjected to filtration, and the obtained first fluorinated polymer A4 was washed with ultrapure water and vacuum-dried at 100°C. The obtained first fluorinated polymer A4 was analyzed by NMR and as a result, PMVE/TFE=33/67 (molar ratio). The 1 mass% thermogravimetric loss temperature of the first fluorinated polymer A4 was 350°C.

The first fluorinated polymer A4 had no melting point.

### <Production of material dispersion B>

To the material dispersion A (1000 g), HPR4002CI (manufactured by DuPont, anion exchange resin, 40 g) was added. 60 minutes after the start of the stirring, the mixture was subjected to filtration to separate the material dispersion A from the ion exchange resin. To the collected material dispersion A, Dowex Monosphere 650C (manufactured by DuPont, cation exchange resin, 40 g) was added. 60 minutes after the start of the stirring, the ion exchange resin was removed by filtration to obtain material dispersion B.

The average particle size and the number of particles of first fluorinated polymer A4 in the material dispersion B are equal to those in the material dispersion A, and the first fluorinated polymer A4 in the material dispersion B had no melting point.

### <Production of second fluorinated polymer>

In a 2.2 L stainless steel pressure resistant reactor, the material dispersion B (850 g), ultrapure water (332 g), PMVE (81 g) and TFE (17 g) were added and heated to 80°C with stirring at 600 rpm. The internal pressure of the reactor when the temperature reached 80°C was 1.4 MPaG. Then, an aqueous ammonium persulfate solution (1.0 mass%, 20 g) was added to initiate polymerization. Since the pressure in the reactor decreased as the polymerization started, TFE was added to keep a constant pressure. This operation was repeatedly conducted and when the amount of TFE added after the start of the polymerization reached 25 g, 7 g of PMVE was injected. Thereafter, every injection of 8 g of TFE, 7 g of PMVE was injected. When the amount of TFE added after the start of the polymerization reached 256 g, addition of TFE and PMVE was terminated, the internal temperature of the reactor was decreased to 10°C to terminated the polymerization, the gas remaining in the reactor was recovered, and the liquid was withdrawn to obtain second aqueous dispersion B1. The amounts of the monomers added before the start of the polymerization were 17 g of TFE and 81 g of PMVE. The amounts of the monomers added after the start of the polymerization were 256 g of TFE and 203 g of PMVE. The total amount of TFE added was 273 g and the total amount of PMVE added was 284 g.

The average particle size of particles of first fluorinated polymer B1 in the second aqueous dispersion B1 was 67.6 nm, the number of the particles of the first fluorinated polymer B1 was 3.6×10¹⁴ particles/mL, and the solid content concentration of the second aqueous dispersion B1 was 10.5 mass%.

The second aqueous dispersion B1 was freeze-agglomerated and subjected to filtration, and the obtained first fluorinated polymer B1 was washed with ultrapure water and vacuum-dried at 100°C. The obtained first fluorinated polymer B1 was analyzed by NMR and as a result, PMVE/TFE=33/67 (molar ratio). The 1 mass% thermogravimetric loss temperature of the first fluorinated polymer B1 was 411°C.

The first fluorinated polymer B1 had no melting point.

### [Ex. 8]

Polymerization was initiated in the same manner as in Ex. 1 except that the amount of the NaAAMPS 50 mass% aqueous solution added was changed to 45 µL (NaAAMPS: 22.5 mg) and that the amount of the aqueous ammonium persulfate solution (2.5 mass%) added was changed to 7 g. Since the pressure in the reactor decreased as the polymerization started, TFE was added to keep a constant pressure. This operation was repeatedly conducted and when the amount of TFE added after the start of the polymerization reached 37 g, octafluoro-1,4-diiodobutane (C4DI, 1.25 g) and 10 g of PMVE were injected. The number of revolution was decreased to 325 rpm and thereafter, every injection of 12 g of TFE, 10 g of PMVE was injected. When the amount of TFE added after the start of the polymerization reached 325 g, addition of TFE and PMVE was terminated, the internal temperature of the reactor was decreased to 10°C to terminated the polymerization, the gas remaining in the reactor was recovered, and the liquid was withdrawn to obtain first aqueous dispersion A5. The amounts of the monomers added before the start of the polymerization were 22 g of TFE and 105 g of PMVE. The amounts of the monomers added after the start of the polymerization were 325 g of TFE and 240 g of PMVE. The total amount of TFE added was 347 g and the total amount of PMVE added was 345 g.

The average particle size of particles of first fluorinated polymer A5 in the first aqueous dispersion A5 was 77.1 nm, the number of the particles of the first fluorinated polymer A5 was 6.1×10¹⁴ particles/mL, and the solid content concentration of the first aqueous dispersion A5 was 23.0 mass%.

The first aqueous dispersion A5 was freeze-agglomerated and subjected to filtration, and the obtained first fluorinated polymer A5 was washed with ultrapure water and vacuum-dried at 100°C. The obtained first fluorinated polymer A5 was analyzed by NMR and as a result, PMVE/TFE=33/67 (molar ratio). The iodine content was 0.1 mass% to the fluorinated polymer A5. The 1 mass% thermogravimetric loss temperature of the first fluorinated polymer A5 was 405°C.

The first fluorinated polymer A5 had no melting point.

### [Ex. 9]

In a 2.2 L stainless steel pressure resistant reactor, ultrapure water (1206 g), a NaAAMPS 50 mass% aqueous solution (30 µL, NaAAMPS: 15 mg), PMVE (81 g) and TFE (17 g) were added and heated to 80°C with stirring at 600 rpm. When the temperature reached 80°C, the internal pressure of the reactor was 1.4 MPaG. An aqueous ammonium persulfate solution (2.5 mass%, 7 g) was added to initiate polymerization. Since the pressure in the reactor decreased as the polymerization started, TFE was added to keep a constant pressure. This operation was repeatedly conducted and when the amount of TFE added after the start of the polymerization reached 25 g, the number of revolution was decreased to 380 rpm, and 2 g of CF₂=CFOCF₂CF(CF₃)OCF₂CF₂CN (8CNVE) was added. Thereafter, every injection of 16 g of TFE, 12 g of PMVE and 1.3 g of 8CNVE were injected. Along with the progress of the polymerization, the aqueous ammonium persulfate solution was properly injected additionally. When the amount of TFE added after the start of the polymerization reached 185 g, addition of TFE, PMVE and 8CNVE was terminated and the internal temperature of the reactor was decreased to 10°C to terminate the polymerization, and the gas remaining in the reactor was recovered and the liquid was withdrawn. The amounts of the monomers added before the start of the polymerization were 17 g of TFE, 81 g of PMVE and 0 g of 8CNVE. The amounts of the monomers added after the start of the polymerization were 185 g of TFE, 108 g of PMVE and 13.7 g of 8CNVE. The total amount of TFE added was 202 g, the total amount of PMVE added was 189 g, and the amount of 8CNVE was 13.7 g. The polymerization time was 400 minutes, and the amount of the aqueous ammonium persulfate solution added was 14cc.

The average particle size of particles of first fluorinated polymer A6 in first aqueous dispersion A6 was 76.6 nm, the number of the particles of the first fluorinated polymer A6 was 5.2×10¹⁴ particles/mL, and the solid content concentration of the first aqueous dispersion A6 was 20.04 mass%.

The first aqueous dispersion A6 was freeze-agglomerated and subjected to filtration, and the obtained first fluorinated polymer A6 was washed with ultrapure water and vacuum-dried at 100°C. The obtained first fluorinated polymer A6 was analyzed by NMR and as a result, PMVE/TFE/8CNVE=28.05/71.5/0.45 (molar ratio). The 1 mass% thermogravimetric loss temperature of the first fluorinated polymer A6 was 392°C.

The first fluorinated polymer A6 had no melting point.

### [Ex. 10]

Polymerization was initiated in the same manner as in Ex. 8 except that CF₂=CFO(CF₂)₃OCF=CF₂ (3.69 g) was added before the start of the polymerization. Since the pressure in the reactor decreased as the polymerization started, TFE was added to keep a constant pressure. This operation was repeatedly conducted and when the amount of TFE added after the start of the polymerization reached 37 g, octafluoro-1,4-diiodobutane (C4DI, 1.25 g) and 10 g of PMVE were injected. The number of revolutions were decreased to 325 rpm and thereafter, every injection of 12 g of TFE, 10 g of PMVE was injected. When the amount of TFE added after the start of the polymerization reached 325 g, addition of TFE and PMVE was terminated, the internal temperature of the reactor was decreased to 10°C to terminated the polymerization, the gas remaining in the reactor was recovered, and the liquid was withdrawn to obtain first aqueous dispersion A5. The amounts of the monomers added before the start of the polymerization were 22 g of TFE and 105 g of PMVE. The amounts of the monomers added after the start of the polymerization were 325 g of TFE and 240 g of PMVE. The total amount of TFE added was 347 g and the total amount of PMVE added was 345 g.

The average particle size of particles of first fluorinated polymer A7 in the first aqueous dispersion A7 was 94.8 nm, the number of the particles of the first fluorinated polymer A7 was 4.2×10¹⁴ particles/mL, and the solid content concentration of the first aqueous dispersion A5 was 27.9 mass%.

The first aqueous dispersion A5 was freeze-agglomerated and subjected to filtration, and the obtained first fluorinated polymer A5 was washed with ultrapure water and vacuum-dried at 100°C. The obtained first fluorinated polymer A5 was analyzed by NMR and as a result, PMVE/TFE=34/66 (molar ratio). The iodine content was 0.1 mass% to the fluorinated polymer A5. The 1 mass% thermogravimetric loss temperature of the first fluorinated polymer A7 was 403°C.

The first fluorinated polymer A7 had no melting point.

### [Ex. 11]

Polymerization was initiated in the same manner as in Ex. 8 except that 45 µL of the NaAAMPS 50 mass% aqueous solution (NaAAMPS: 22.5 mg) was changed to 45 µL of a sodium 2-methacrylamide-2-methylpropanesulfonate (NaMAMPS) 50 mass% aqueous solution (NaMAMPS:22.5 mg). Since the pressure in the reactor decreased as the polymerization started, TFE was added to keep a constant pressure. This operation was repeatedly conducted and when the amount of TFE added after the start of the polymerization reached 37 g, octafluoro-1,4-diiodobutane (C4DI, 1.25 g) and 10 g of PMVE were injected. The number of revolution was decreased to 325 rpm and thereafter, every injection of 12 g of TFE, 10 g of PMVE was injected. When the amount of TFE added after the start of the polymerization reached 325 g, addition of TFE and PMVE was terminated, the internal temperature of the reactor was decreased to 10°C to terminated the polymerization, the gas remaining in the reactor was recovered, and the liquid was withdrawn to obtain first aqueous dispersion A5. The amounts of the monomers added before the start of the polymerization were 22 g of TFE and 105 g of PMVE. The amounts of the monomers added after the start of the polymerization were 325 g of TFE and 240 g of PMVE. The total amount of TFE added was 347 g and the total amount of PMVE added was 345 g.

The average particle size of particles of first fluorinated polymer A8 in the first aqueous dispersion A8 was 103.1 nm, the number of the particles of the first fluorinated polymer A8 was 3.46×10¹⁴ particles/mL, and the solid content concentration of the first aqueous dispersion A8 was 28.8 mass%.

The first aqueous dispersion A5 was freeze-agglomerated and subjected to filtration, and the obtained first fluorinated polymer A5 was washed with ultrapure water and vacuum-dried at 100°C. The obtained first fluorinated polymer A5 was analyzed by NMR and as a result, PMVE/TFE=35/66 (molar ratio). The iodine content was 0.1 mass% to the fluorinated polymer A5. The 1 mass% thermogravimetric loss temperature of the first fluorinated polymer A8 was 400°C.

The first fluorinated polymer A8 had no melting point.

In production in each of Ex. 1 to 5 and 7 to 11, polymerization for the first fluorinated polymer was conducted substantially in the absence of the emulsifier having a fluorine atom and the emulsifier having no fluorine atom. In the aqueous dispersion obtained in each of 1 to 5 and 7 to 11, substantially no emulsifier having a fluorine atom and no emulsifier having no fluorine atom were contained. In the aqueous dispersion in each of 1 to 5 and 7 to 11, the content of the compound represented by the formula (S1) to the total mass of the aqueous dispersion and the content of the compound represented by the formula (S3) to the total mass of the aqueous dispersion were both 5 mass ppm or less (both were 50 mass ppb or less). Whereas in production in Ex. 6, in which an emulsifier was used, the aqueous dispersion contained the emulsifier.

The concentration to the aqueous medium in the aqueous dispersion in Table 6 refers to the content of the compound X.

**[Table 6]**

| | First aqueous dispersion | | | | | | | | |
|---|---|---|---|---|---|---|---|---|---|
| | Type | Use of emulsifier | Use of compound X | Content of compound X [ppm] | First fluorinated polymer | | | | |
| | | | | | Type | Average particle size [nm] | Number of particles [10¹⁴ particles/mL] | Melting point [°C] | 1 mass% thermogravimetric loss temperature [°C] |
| Ex. 1 | A1 | Not contained | Contained | 4.2 | A1 | 79.6 | 2.6 | Nil | 412 |
| Ex. 2 | A2 | Not contained | Contained | 8.4 | A2 | 64.3 | 5 | Nil | 412 |
| Ex. 3 | A3 | Not contained | Contained | 12.6 | A3 | 68.2 | 9.8 | Nil | 412 |
| Ex. 4 | C1 | Not contained | Contained | 2.4 | C1 | 86.9 | 0.9 | Nil | 415 |
| Ex. 5 | C2 | Not contained | Contained | 3.9 | C2 | 78.1 | 0.6 | Nil | 363 |
| Ex. 6 | C3 | Contained | Not contained | - | C3 | 84.2 | 3.1 | Nil | 406 |
| Ex. 7 | A4 | Not contained | Contained | 6 | A4 | 43.5 | 3.9 | Nil | 350 |
| Ex. 8 | A5 | Not contained | Contained | 12.6 | A4 | 77.1 | 6.1 | Nil | 405 |
| Ex. 9 | A6 | Not contained | Contained | 12.6 | A4 | 76.6 | 5.2 | Nil | 392 |
| Ex. 10 | A7 | Not contained | Contained | 12.6 | A7 | 94.8 | 4.2 | Nil | 403 |
| Ex. 11 | A8 | Not contained | Contained | 12.6 | A8 | 103.1 | 406 | Nil | 400 |

In the following Table, the content of the compound represented by the formula (S1) and the content of the compound represented by the formula (S3) in the material dispersion A and the material dispersion B in Ex. 7 are specifically shown. The content of formula (S1) refers to the total content of the compounds of the formula (S1) wherein n1 is an integer of 3 to 13, to the total mass of each material dispersion, and the content of formula (S3) refers to the total content of the compounds of the formula (S3) wherein n2 is an integer of 4 to 10, to the total mass of each material dispersion.

**[Table 7]**

| | | Material dispersion A | Material dispersion B | | | Material dispersion A | Material dispersion B |
|---|---|---|---|---|---|---|---|
| Content of formula (S1) (mass ppb) | n=3 | 52.5 | 0.1 | Content of formula (S3) (mass ppb) | n=4 | 0 | 0 |
| | n=4 | 0 | 0 | | n=5 | 0 | 0 |
| | n=5 | 40.4 | 0.1 | | n=6 | 0 | 0 |
| | n=6 | 1.0 | 0 | | n=7 | 0 | 0 |
| | n=7 | 30.4 | 0.7 | | n=8 | 0 | 0 |
| | n=8 | 1.0 | 0 | | n=9 | 0 | 0 |
| | n=9 | 8.8 | 4.1 | | n=10 | 0 | 0 |
| | n=10 | 0 | 0 | | - | - | - |
| | n=11 | 1.2 | 0 | | - | - | - |
| | n=12 | 0 | 0 | | - | - | - |
| | n=13 | 0 | 0 | | - | - | - |
| Total (mass ppb) | | 135.3 | 5.0 | Total (mass ppb) | | 0 | 0 |

In the following Tables 8 and 9, the content of the compound represented by (S1) and the content of the compound represented by (S3) contained in the solid composition in each of Ex. 1 to 6, 8 to 11 are specifically shown. In Tables, N.D. refers to a value less than the quantitative determination limit in the measurement.

**[Table 8]**

| | | Ex. 1 | Ex. 2 | Ex. 3 | Ex. 4 | Ex. 5 | Ex. 6 | Ex. 8 | Ex. 9 | Ex. 10 | Ex. 11 |
|---|---|---|---|---|---|---|---|---|---|---|---|
| Content of formula (S1) (ppb) | n=3 | 4 | 0 | 4 | 4 | 4 | N.D. | 32 | 2 | 5 | 6 |
| | n=4 | N.D. | N.D. | N.D. | N.D. | N.D. | N.D. | N.D. | N.D. | N.D. | N.D. |
| | n=5 | 1 | 1 | 1 | 1 | 1 | N.D. | 16 | 1 | 1 | 26 |
| | n=6 | 1 | 0 | 1 | 1 | 1 | N.D. | 0 | 0 | 1 | 1 |
| | n=7 | 1 | 5 | 0 | 0 | 0 | N.D. | 27 | 3 | 6 | 56 |
| | n=8 | 0 | 0 | 0 | 0 | 0 | N.D. | 0 | 0 | 1 | 1 |
| | n=9 | 2 | 36 | 1 | 40 | 45 | N.D. | 41 | 30 | 21 | 167 |
| | n=10 | 0 | 0 | 0 | 0 | 0 | N.D. | 0 | 2 | 1 | 3 |
| | n=11 | 40 | 172 | 21 | 180 | 160 | N.D. | 137 | 150 | 67 | 421 |
| | n=12 | 0 | 0 | 0 | 0 | 0 | N.D. | 0 | 4 | 1 | 4 |
| | n=13 | 16 | 37 | 15 | 15 | 15 | N.D. | 43 | 17 | 17 | 107 |
| Total (mass ppb) | | 97 | 266 | 72 | 242 | 227 | 0 | 315 | 239 | 147 | 808 |

**[Table 9]**

| | | Ex. 1 | Ex. 2 | Ex. 3 | Ex. 4 | Ex. 5 | Ex. 6 | Ex. 8 | Ex. 9 | Ex. 10 | Ex. 11 |
|---|---|---|---|---|---|---|---|---|---|---|---|
| Content of formula (S3) (ppb) | n=4 | N.D. | N.D. | N.D. | 5 | 4 | N.D. | N.D. | N.D. | N.D. | N.D. |
| | n=5 | N.D. | N.D. | N.D. | 0 | 0 | N.D. | N.D. | N.D. | N.D. | N.D. |
| | n=6 | N.D. | N.D. | N.D. | 4 | 9 | N.D. | N.D. | N.D. | N.D. | N.D. |
| | n=7 | N.D. | N.D. | N.D. | 0 | 0 | N.D. | N.D. | N.D. | N.D. | N.D. |
| | n=8 | N.D. | N.D. | N.D. | 11 | 29 | N.D. | N.D. | N.D. | N.D. | N.D. |
| | n=9 | N.D. | N.D. | N.D. | 0 | 0 | N.D. | N.D. | N.D. | N.D. | N.D. |
| | n=10 | N.D. | N.D. | N.D. | 25 | 32 | N.D. | N.D. | N.D. | N.D. | N.D. |
| Total (mass ppb) | | 0 | 0 | 0 | 45 | 74 | 0 | 0 | 0 | 0 | 0 |

In the following Table 10, the content of the emulsifier having a fluorine atom contained in the solid composition in each of Ex. 1 to 6, 8 to 11 is specifically shown. In Table, N.D. refers to a value less than the quantitative determination limit in the measurement.

**[Table 10]**

| | | Ex. 1 | Ex. 2 | Ex. 3 | Ex. 4 | Ex. 5 | Ex. 6 | Ex. 8 | Ex. 9 | Ex. 10 | Ex. 11 |
|---|---|---|---|---|---|---|---|---|---|---|---|
| Fluorinated emulsifier | Total (ppb) | N.D. | N.D. | N.D. | N.D. | N.D. | 2000 | N.D. | N.D. | N.D. | N.D. |

In the following Table 11, the contents (ppm) of the metal elements contained in the solid composition in each of Ex. 1 to 3, 6 and 8 to 11 are specifically shown.

**[Table 11]**

| | **Ex. 1** | **Ex. 2** | **Ex. 3** | **Ex. 6** | **Ex. 8** | **Ex. 9** | **Ex. 10** | **Ex. 11** |
|---|---|---|---|---|---|---|---|---|
| **L** | **0.0** | **0.0** | **0.0** | **0.0** | **0.0** | **0.0** | **0.0** | **0.0** |
| **Be** | **0.0** | **0.0** | **0.0** | **0.0** | **0.0** | **0.0** | **0.0** | **0.0** |
| **Na** | **2.0** | **1.0** | **1.1** | **1.0** | **1.1** | **1.2** | **0.9** | **0.7** |
| **Mg** | **0.1** | **0.8** | **0.2** | **0.1** | **0.1** | **0.1** | **0.1** | **0.1** |
| **Al** | **0.4** | **0.1** | **0.5** | **0.2** | **0.2** | **0.2** | **0.2** | **0.2** |
| **K** | **0.2** | **0.3** | **0.1** | **0.3** | **0.3** | **0.3** | **0.3** | **0.3** |
| **Ca** | **0.1** | **0.2** | **0.1** | **1.6** | **1.6** | **1.6** | **1.6** | **1.6** |
| **Ti** | **0.1** | **0.1** | **0.1** | **0.0** | **0.0** | **0.0** | **0.0** | **0.0** |
| **V** | **0.0** | **0.0** | **0.0** | **0.0** | **0.0** | **0.0** | **0.0** | **0.0** |
| **Cr** | **0.1** | **0.3** | **0.1** | **0.0** | **0.0** | **0.0** | **0.0** | **0.0** |
| **Mn** | **0.0** | **0.1** | **0.3** | **0.0** | **0.0** | **0.0** | **0.0** | **0.0** |
| **Fe** | **0.5** | **0.3** | **0.2** | **0.5** | **0.5** | **0.5** | **0.5** | **0.5** |
| **Co** | **0.0** | **0.0** | **0.1** | **0.0** | **0.0** | **0.0** | **0.0** | **0.0** |
| **Ni** | **0.1** | **0.3** | **1.5** | **0.0** | **0.0** | **0.0** | **0.0** | **0.0** |
| **Cu** | **0.0** | **0.0** | **0.0** | **0.0** | **0.0** | **0.0** | **0.0** | **0.0** |
| **Zn** | **0.2** | **0.4** | **0.2** | **0.1** | **0.1** | **0.1** | **0.1** | **0.1** |
| **Ga** | **0.0** | **0.0** | **0.0** | **0.0** | **0.0** | **0.0** | **0.0** | **0.0** |
| **Rb** | **0.0** | **0.0** | **0.0** | **0.0** | **0.0** | **0.0** | **0.0** | **0.0** |
| **Sr** | **0.0** | **0.0** | **0.0** | **0.0** | **0.0** | **0.0** | **0.0** | **0.0** |
| **Zr** | **0.0** | **0.1** | **0.1** | **0.0** | **0.0** | **0.0** | **0.0** | **0.0** |
| **Mo** | **0.0** | **0.0** | **0.1** | **0.0** | **0.0** | **0.0** | **0.0** | **0.0** |
| **Ag** | **0.0** | **0.0** | **0.0** | **0.0** | **0.0** | **0.0** | **0.0** | **0.0** |
| **Cd** | **0.0** | **0.0** | **0.0** | **0.0** | **0.0** | **0.0** | **0.0** | **0.0** |
| **In** | **0.0** | **0.0** | **0.0** | **0.0** | **0.0** | **0.0** | **0.0** | **0.0** |
| **Sn** | **0.0** | **0.0** | **0.0** | **0.0** | **0.0** | **0.0** | **0.0** | **0.0** |
| **Cs** | **0.0** | **0.0** | **0.0** | **0.0** | **0.0** | **0.0** | **0.0** | **0.0** |
| **Ba** | **0.0** | **0.0** | **0.0** | **0.0** | **0.0** | **0.0** | **0.0** | **0.0** |
| **Pb** | **0.0** | **0.0** | **0.0** | **0.0** | **0.0** | **0.0** | **0.0** | **0.0** |
| **Bi** | **0.0** | **0.0** | **0.0** | **0.0** | **0.0** | **0.0** | **0.0** | **0.0** |
| **Total** | **3.9** | **4.1** | **4.7** | **3.9** | **4.0** | **4.1** | **3.8** | **3.6** |

It was shown that according to the present production method, it is possible to produce an aqueous dispersion with a large amount of particles of the fluorinated polymer substantially without using an emulsifier having a fluorine atom (Ex. 1 to 5 and 7 to 11, in particular, Ex. 1 to 3 and 7 to 11). Further, Ex. 6 corresponds to the method for producing an aqueous dispersion using an emulsifier.

It was shown that when the content of the compound X is 5.0 to 30.0 mass ppm to the total mass of the aqueous medium, more excellent effect of the present invention is achieved (Ex. 2 and 3).

The entire disclosure of Japanese Patent Application No. 2023-205993 filed on December 6, 2023 including specification, claims and summary is incorporated herein by reference in its entirety.

## Claims

1. A method for producing an aqueous dispersion, which comprises:
polymerizing a first monomer containing tetrafluoroethylene in the presence of a compound represented by the formula (X) and a polymerization initiator, in the presence of an aqueous medium and substantially in the absence of an emulsifier having a fluorine atom,
to produce an aqueous dispersion that contains particles of a first fluorinated polymer having no melting point, the particles having an average particle size of 500 nm or less:
C(X¹)(X²)=C(X³)-L-Z (X)
in the formula (X),
X¹, X² and X³ are each independently a hydrogen atom, a fluorine atom, a perfluoromethyl group or an alkyl group,
L is a single bond or a bivalent linking group, and
Z is an anionic group or a salt of the anionic group.

2. The method for producing an aqueous dispersion according to Claim 1, wherein Z is -SO₃M,
where M is a hydrogen atom, a metal atom, N(R^{M1})₄ or P(R^{M2})₄, and
R^{M1} and R^{M2} are each independently a hydrogen atom or a substituent, provided that any two of R^{M1} may be mutually bonded to form a ring, the plurality of R^{M1} may be identical or different from each other, any two of R^{M2} may be mutually bonded to form a ring, and the plurality of R^{M2} may be identical or different from each other.

3. The method for producing an aqueous dispersion according to Claim 1 or 2, wherein the content of the compound represented by the formula (X) is 1.0 to 1000 mass ppm to the total mass of the aqueous medium.

4. The method for producing an aqueous dispersion according to Claim 1 or 2, wherein the first monomer contains a perfluoroalkyl vinyl ether.

5. A method for producing a second fluorinated polymer, which comprises polymerizing a second monomer in the aqueous dispersion produced by the production method as defined in Claim 1 or 2, to produce a second fluorinated polymer.

6. The method for producing a second fluorinated polymer according to Claim 5, wherein the content of a compound represented by the formula (S1) is 5 mass ppm or less to the total mass of the aqueous dispersion:
H-(CF₂)ₙ₁-COOM^{S} (S1)
in the formula (S1),
n1 is an integer of 3 to 13, and
M^{S} is a hydrogen atom, Na, K or NH₄.

7. The method for producing a second fluorinated polymer according to Claim 5, wherein the content of a compound represented by the formula (S3) is 5 mass ppm or less to the total mass of the aqueous dispersion:
H-(CF₂)ₙ₂-SO₃M^{S} (S3)
in the formula (S3),
n2 is an integer of 4 to 10, and
M^{S} is a hydrogen atom, Na, K or NH₄.

8. The method for producing a second fluorinated polymer according to Claim 5, wherein the second monomer contains at least one member selected from the group consisting of tetrafluoroethylene, chlorotrifluoroethylene and vinylidene fluoride.

9. The method for producing a second fluorinated polymer according to Claim 5, wherein the second monomer contains a perfluoroalkyl vinyl ether.

10. The method for producing a second fluorinated polymer according to Claim 5, wherein the second fluorinated polymer has no melting point.

11. An aqueous dispersion, which contains substantially no water-soluble emulsifier having a fluorine atom, and which contains particles of a fluorinated polymer and an aqueous medium,
wherein the number of the particles is 0.5×10¹⁴ particles/mL or more,
the average particle size of the particles is 500 nm or less,
the fluorinated polymer has units based on tetrafluoroethylene and units based on a perfluoroalkyl vinyl ether, and
the fluorinated polymer has no melting point.

12. The aqueous dispersion according to Claim 11, wherein the fluorinated polymer has a 1 mass% thermogravimetric loss temperature of 350°C or higher.

13. A solid composition which contains a fluorinated polymer having no melting point,
wherein the fluorinated polymer has units based on tetrafluoroethylene,
the content of an emulsifier having a fluorine atom is 1500 mass ppb or less to the total mass of the solid composition,
the content of a compound represented by the formula (S1) is 1500 mass ppb or less to the total mass of the solid composition, and
the content of a compound represented by the formula (S3) is 100 mass ppb or less to the total mass of the solid composition:
H-(CF₂)ₙ₁-COOM^{S} (S1)
in the formula (S1),
n1 is an integer of 3 to 13, and
M^{S} is a hydrogen atom, Na, K or NH₄;
H-(CF₂)ₙ₂-SO₃M^{S} (S3)
in the formula (S3),
n2 is an integer of 4 to 10, and
M^{S} is a hydrogen atom, Na, K or NH₄.

14. The solid composition according to Claim 13, wherein the solid composition has a metal content of less than 5 mass ppm to the total mass of the solid composition.
